(19) Europäisches Patentamt
European Patent Office
Office européen des brevets

(11) EP 4 653 833 A1

(12) EUROPEAN PATENT APPLICATION

(43) Date of publication:
**26.11.2025 Bulletin 2025/48**

(21) Application number: **25176623.4**

(22) Date of filing: **15.05.2025**

(51) International Patent Classification (IPC):
***G01L 1/22*** *(2006.01)* ***G01L 5/00*** *(2006.01)*
***G01L 1/26*** *(2006.01)* ***G01L 5/16*** *(2020.01)*

(52) Cooperative Patent Classification (CPC):
**G01L 5/16; G01L 1/225; G01L 1/26; G01L 5/0047**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **23.05.2024 US 202418672344**

(71) Applicant: **STMicroelectronics International N.V.**
**1228 Plan-les-Ouates, Geneva (CH)**

(72) Inventors:
- **INZIRILLO, Alberto**
  **95123 Catania (IT)**
- **DISTEFANO, Vittorio Adriano Ugo**
  **95030 Sant'Agata li Battiati (CT) (IT)**
- **GRANATA, Angelo**
  **96100 Siracusa (IT)**

(74) Representative: **Studio Torta S.p.A.**
**Via Viotti, 9**
**10121 Torino (IT)**

# (54) APPARATUS AND METHODS UTILIZING STRESS SENSING STRUCTURES TO DETERMINE MECHANICAL STRESS DISTRIBUTION IN A SEMICONDUCTOR MATERIAL

(57) Example apparatuses, and methods for determining a mechanical stress distribution in a semiconductor material are provided. An example apparatus includes a sensing cell group and voltage conversion circuitry. The sensing cell group is disposed on a surface of a semiconductor material and includes a plurality of stress sensing structures each having a different combination of sensing characteristics. Each of the stress sensing structures detect a component of a mechanical stress on the semiconductor material and generate an electrical signal representing the component of the mechanical stress. The voltage conversion circuitry receives the electrical signal representing the component of the mechanical stress from each stress sensing structure and generates a stress voltage representing the component of the mechanical stress. The stress voltages from each stress sensing structure are combined to determine a mechanical stress value representing the mechanical stress on the semiconductor material at the sensing cell group.

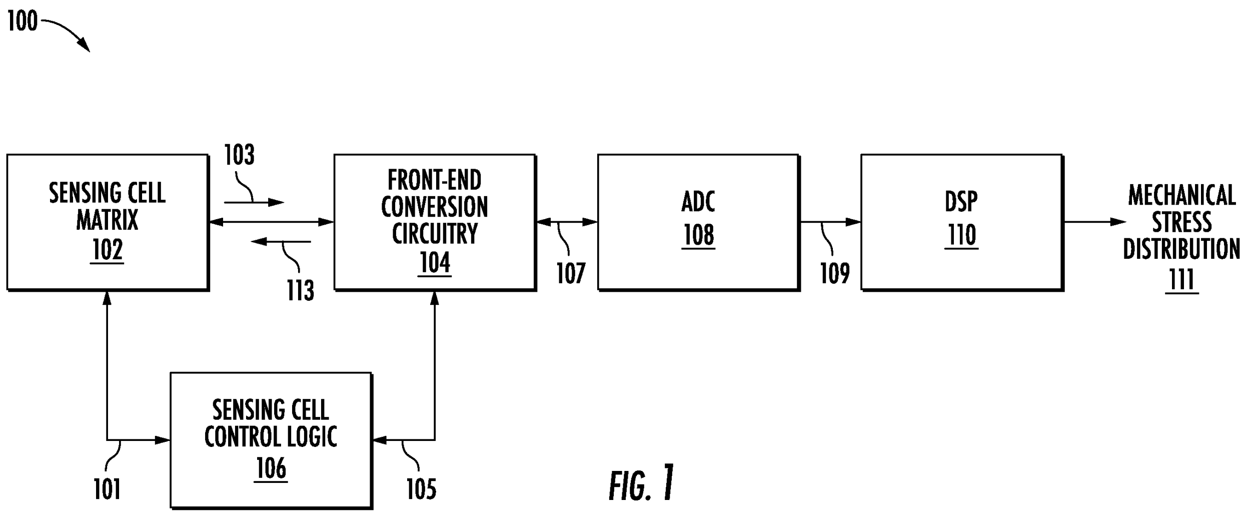


FIG. 1

EP 4 653 833 A1

## Description

### TECHNOLOGICAL FIELD

The present invention relates generally to measuring stress in a semiconductor material, and more particularly, to utilizing various stress sensing structures to map a mechanical stress distribution.

### BACKGROUND

Many electrical systems implement electronic circuits fabricated on semiconductor wafers, including, for example, Silicon wafers. Processes and packaging associated with the fabrication of semiconductor wafers may introduce mechanical stress on the cut portion of a semiconductor wafer (e.g., die). For example, sawing operations or the molding process may induce mechanical stress on the semiconductor substrate comprising the die. Such mechanical stresses may impact the performance of the electronic system, associated circuits, and associated electrical components.

Applicant has identified many technical challenges and difficulties associated with determining the distribution of mechanical stresses in a semiconductor material.

Thus, an aim of the invention is to overcome the disadvantages of the prior art related to determining the distribution of mechanical stresses in a semiconductor material.

### SUMMARY

According to the invention, an apparatus and a method are provided, as defined in the appended claims. Various embodiments are directed to example apparatuses, and methods for determining a mechanical stress distribution in a semiconductor material. An example apparatus comprises a sensing cell group and voltage conversion circuitry. The sensing cell group is disposed on a surface of a semiconductor material, the sensing cell group comprising a plurality of stress sensing structures each comprising a different combination of sensing characteristics. The stress sensing structures are configured to detect a component of a mechanical stress on the semiconductor material, and generate an electrical signal representing the component of the mechanical stress. The voltage conversion circuitry is configured to receive the electrical signal representing the component of the mechanical stress from each stress sensing structure and generate a stress voltage representing the component of the mechanical stress. The stress voltages from each stress sensing structure of a sensing cell group are combined to determine a mechanical stress value representing the mechanical stress on the semiconductor material at the sensing cell group.

In some embodiments, the sensing characteristics comprise at least one of a sensing type, a doping type, and an orientation.

In some embodiments, the sensing type comprises at least one of a Wheatstone Bridge sensing type and a current mirror configuration sensing type.

In some embodiments, the orientation refers to a position of the stress sensing structure relative to a semiconductor orientation of the semiconductor material.

In some embodiments, the sensing cell group comprises at least a first stress sensing structure having a Wheatstone Bridge sensing type; a second stress sensing structure having a current mirror configuration sensing type comprising a first plurality of transistors, wherein each transistor of the first plurality of transistors has an n-type doping type; and a third stress sensing structure having a current mirror configuration sensing type comprising a second plurality of transistors, wherein each transistor of the second plurality of transistors has an p-type doping type.

In some embodiments, a first portion of the first plurality of transistors are positioned at a 45-degree angle relative to the semiconductor orientation, and a second portion of the first plurality of transistors are positioned at a negative 45-degree angle relative to the semiconductor orientation.

In some embodiments, a first portion of the second plurality of transistors are positioned at a 0-degree angle relative to the semiconductor orientation, and a second portion of the second plurality of transistors are positioned at a 90-degree angle relative to the semiconductor orientation.

In some embodiments, the voltage conversion circuitry comprises: a first switch configured to enable a first electrical path configured to generate a first stress voltage representing a first component of the mechanical stress measured by a first stress sensing structure; and a second switch configured to enable a second electrical path configured to generate a second stress voltage representing a second component of the mechanical stress measured by a second stress sensing structure, wherein the sensing type of the first stress sensing structure is different than the sensing type of the second stress sensing structure.

In some embodiments, the example apparatus further comprises a sensing cell matrix comprising a plurality of sensing cell groups disposed across a surface of the semiconductor material, wherein a mechanical stress distribution representing the mechanical stress on the semiconductor material is determined based on the mechanical stress value at each sensing cell group of the plurality of sensing cell groups.

In some embodiments, the example apparatus further comprises a processor, comprising one or more processors and one or more storage devices storing instructions that are operable, when executed by the one or more processors, to cause the processor to: receive a stress voltage from each stress sensing structure in a sensing cell group, wherein each stress voltage represents a component of the mechanical stress; and determine the mechanical stress value at the sensing cell group based on the stress voltages.

In some embodiments, the processor is further configured to determine a mechanical stress distribution across the semiconductor material based on the mechanical stress value at each sensing cell group.

In some embodiments, the apparatus further comprises common mode loop circuitry configured to bias a stress sensing structure based on the stress voltage.

In some embodiments, the common mode loop circuitry is configured to provide a bias voltage for at least a first stress sensing structure and a bias current for at least a second stress sensing structure based on the stress voltage.

In some embodiments, the example apparatus further comprises a micro-electro-mechanical system (MEMS) gyroscope, wherein an output of the MEMS gyroscope is adjusted based on the mechanical stress on the semiconductor material.

In some embodiments, the example apparatus further comprises a temperature sensor, wherein the mechanical stress is adjusted based on a temperature received from the temperature sensor.

A method for determining a mechanical stress distribution on a semiconductor material is further provided. In some embodiments, the method comprises receiving, at a processor, a stress voltage from a plurality of stress sensing structures disposed on a surface of a semiconductor material and comprising a sensing cell group. In some embodiments, the stress voltage represents a component of a mechanical stress on the semiconductor material at the sensing cell group. In some embodiments, each stress sensing structure comprising the sensing cell group exhibits a unique combination of sensing characteristics. In some embodiments, a plurality of sensing cell groups are disposed on the surface of the semiconductor material in a sensing cell matrix. The method further comprises determining a plurality of mechanical stress values representing the mechanical stress on the semiconductor material at the sensing cell group for each sensing cell group comprising the sensing cell matrix, and determining a mechanical stress distribution representing the mechanical stress on the semiconductor material based on the plurality of mechanical stress values.

In some embodiments, the stress voltage is received from voltage conversion circuitry configured to receive an electrical signal representing the component of the mechanical stress from each stress sensing structure and generate the stress voltage representing the component of the mechanical stress based on the electrical signal.

In some embodiments, the sensing characteristics comprise at least one of a sensing type, a doping type, and an orientation.

In some embodiments, the sensing type comprises at least one of a Wheatstone Bridge sensing type and a current mirror configuration sensing type.

A second example apparatus is further provided. The second example apparatus comprises a sensing element and a mechanical stress measurement apparatus. The sensing element comprises a material configured to determine a physical characteristic of an environment based on one or more electrical properties of the material. The mechanical stress measurement apparatus comprises a sensing cell group disposed on a surface of a semiconductor material and voltage conversion circuitry. The sensing cell group comprises a plurality of stress sensing structures each comprising a different combination of sensing characteristics and configured to detect a component of a mechanical stress on the semiconductor material and generate an electrical signal representing the component of the mechanical stress. The voltage conversion circuitry is configured to receive the electrical signal representing the component of the mechanical stress from each stress sensing structure and generate a stress voltage representing the component of the mechanical stress. The stress voltages from each stress sensing structure of a sensing cell group are combined to determine a mechanical stress value representing the mechanical stress on the semiconductor material at the sensing cell group. The physical characteristic is adjusted based on the mechanical stress value representing the mechanical stress on the semiconductor material at the sensing cell group.

## BRIEF DESCRIPTION OF THE DRAWINGS

Reference will now be made to the accompanying drawings, purely as non-limitative examples, for the understanding of the present invention. The components illustrated in the figures may or may not be present in certain embodiments described herein. Some embodiments may include fewer (or more) components than those shown in the figures in accordance with an example embodiment of the present disclosure.

FIG. 1 illustrates a block diagram of an example stress sensing device in accordance with an example embodiment of the present invention.

FIG. 2 illustrates a detailed system diagram of an example stress sensing device in accordance with an example embodiment of the present invention.

FIG. 3 illustrates a circuit-level diagram of an example sensing cell group in accordance with an example embodiment of the present invention.

FIG. 4 illustrates a circuit-level diagram of example current and/or voltage to voltage conversion circuitry in accordance with an example embodiment of the present invention.

FIG. 5 illustrates example electrical paths through the example current and/or voltage to voltage conversion circuitry in accordance with an example embodiment of the present invention.

FIG. 6 illustrates a circuit-level diagram of example common mode loop circuitry in accordance with an example embodiment of the present invention.

FIG. 7 illustrates an example stress sensing device configured to compensate for temperature in accordance with an example embodiment of the present invention.

FIG. 8 illustrates an example electrical system comprising a sensing element configured to modify observed data based on the output of a stress sensing device in accordance with an example embodiment of the present invention.

FIG. 9 depicts a flowchart illustrating a process for determining a mechanical stress distribution in a semiconductor material in accordance with an example embodiment of the present invention.

FIG. 10 illustrates an example mechanical stress distribution in a semiconductor material determined in accordance with an example embodiment of the present invention.

FIG. 11 illustrates a block diagram depicting example components of a digital signal processor (DSP) in accordance with an example embodiment of the present invention.

## DETAILED DESCRIPTION

Example embodiments will be described more fully hereinafter with reference to the accompanying drawings, in which some, but not all embodiments of the inventions of the disclosure are shown. Indeed, embodiments of the disclosure may be embodied in many different forms without departing from the scope of the invention as defined in the appended claims. Like numbers refer to like elements throughout.

Various example embodiments address technical problems associated with determining mechanical stresses in semiconductor materials, such as semiconductor materials comprising sensing elements configured to determine physical characteristics of a surrounding environment based on the electrical properties of the semiconductor materials. As understood by those of skill in the field to which the present disclosure pertains, there are numerous example scenarios in which a sensing element or other electrical component may benefit from accurately mapping the mechanical stresses on a semiconductor material.

For example, many electrical systems implement electronic circuits on semiconductor die cut from fabricated semiconductor wafers. Processes and packaging associated with the fabrication of semiconductor wafers may introduce mechanical stress on the semiconductor die. For example, sawing operations or the molding process may induce mechanical stress on the semiconductor substrate of the die. Such stresses may impact the performance of the electronic system, associated circuits, and associated electrical components.

A micro-electro-mechanical system (MEMS) gyroscope is an example electrical system subject to variation based on mechanical stress. During operation, a MEMS gyroscope may determine the physical orientation and/or movement such as yaw, pitch, roll, forward, back, left, right, etc. of the MEMS gyroscope based on the electrical properties of the semiconductor materials comprising the MEMS gyroscope. A MEMS gyroscope may be subjected to environmental variations, such as, temperature changes, package stresses, aging, and so on. Such environmental variation may induce mechanical stress on the MEMS gyroscope, such that the performance of the MEMS gyroscope may be affected.

Accordingly, stress sensing devices may be incorporated into electrical systems (e.g., MEMS gyroscopes) to characterize mechanical stresses that act on the semiconductor material comprising the sensing element. Stress sensing devices that are easy to operate, provide high sensitivity, and may be arrayed to perform measurements on large structures may be desirable. The determined mechanical stress distribution on a semiconductor material may be utilized to improve performance of a sensing element (e.g., MEMS gyroscope) by compensating measurements based on the mechanical stresses determined in the mechanical stress distribution.

In some examples, individual stress-sensing structures have been disposed on the surface of a semiconductor material to determine mechanical stresses on the semiconductor material. However, single stress-sensing structures are unable to acquire a mechanical stress distribution. In addition, single stress-sensing structures are unable to provide accurate measurements of the stresses on a semiconductor material. Inaccurate stress measurements prevent adequate compensation of measurements made by the sensing elements utilizing the electrical properties of the semiconductor material.

The various example embodiments described herein utilize various techniques to ensure accurate determination of a mechanical stress distribution on a semiconductor material. For example, a stress sensing device according to the present disclosure includes a plurality of sensing cell groups distributed on the surface of the semiconductor material. Each sensing cell group includes a plurality of stress sensing structures. Stress sensing structures may include various stress sensing types, doping types, orientations, and other sensing characteristics. Variations in sensing characteristics enable the measurement of various components of the mechanical stress at a particular position.

For example, a stress sensing structure designed according to a Wheatstone Bridge sensing type may be configured to determine a sum of mechanical stress in orthogonal directions at a particular location. Similarly, a stress sensing structure designed according to a current mirror configuration sensing type may be configured to determine a difference of mechanical stress in orthogonal directions. In addition, the orientation of a stress sensing structure may be rotated to detected mechanical stresses on the semiconductor material in various directions. Further, the doping type of a stress sensing structure may be altered to change the sensitivity of a particular stress sensing structure. Each variation in sensing characteristic may enable determination of various components of the mechanical stress on the semiconductor material.

Utilizing the various components of each stress sensing structure in a sensing cell group may enable the determination of a sensing cell value representing the mechanical stress on the semiconductor material at the sensing cell group. Distributing a plurality of sensing cell groups in a sensing cell matrix across a surface of the semiconductor material may enable the determination of a sensing cell distribution across the semiconductor material.

As a result of the herein described example embodiments and in some examples, the accuracy of mechanical stress measurement on a semiconductor material may be greatly improved. In addition, the accuracy and reliability of sensing elements based on the electrical properties of the semiconductor material may be greatly improved.

Referring now to FIG. 1, a block diagram of an example stress sensing device (or apparatus) 100 is provided. As depicted in FIG. 1, the example stress sensing device 100 includes a sensing cell matrix 102 electrically coupled to front-end conversion circuitry 104, configured to transmit electrical sensing signals 103 and receive bias signals 113. The transfer of electrical signals (e.g., electrical sensing signals 103, bias signals 113) between the sensing cell matrix 102 and the front-end conversion circuitry 104 is managed by matrix configuration signals 101 and front-end configuration signals 105 transmitted by the sensing cell control logic 106. As further depicted in FIG. 1, an analog-to-digital converter (ADC) 108 is electrically coupled to the front-end conversion circuitry 104. The ADC 108 is configured to receive an output stress voltage 107 from the front-end conversion circuitry 104 and generate a digital stress voltage to be transmitted to the electrically coupled digital signal processor (DSP) 110. The DSP 110 generates a mechanical stress distribution 111 based at least in part on the digital stress voltages 109.

As depicted in FIG. 1, the example stress sensing device 100 includes a sensing cell matrix 102. A sensing cell matrix 102 comprises a plurality of stress sensing structures distributed on a surface of a semiconductor material. As described in relation to FIG. 2, the stress sensing structures of the sensing cell matrix 102 are organized into sensing cell groups. The sensing cell groups may be distributed across the surface of the semiconductor material to maximize coverage of the surface of the semiconductor. For example, in some embodiments, the sensing cell matrix may comprise a plurality of sensing cell groups organized in rows and columns across the surface of the semiconductor.

The sensing cell matrix 102 includes one or more electrical connections to the front-end conversion circuitry 104 facilitating the transmission of electrical sensing signals 103 corresponding to each stress sensing structure comprising the sensing cell matrix 102.

As further depicted in FIG. 1, the example stress sensing device 100 includes sensing cell control logic 106. The sensing cell control logic 106 comprises circuitry including hardware and/or software configured to manage the electrical sensing signals 103 output by the sensing cell matrix 102 and/or the bias signals 113 received at the sensing cell matrix 102. The sensing cell control logic 106 may manage the exchange of electrical signals by transmitting electrical configuration signals (e.g., matrix configuration signal 101, front-end configuration signal 105) to the sensing cell matrix 102 and the front-end conversion circuitry 104. The matrix configuration signal 101 may determine the stress sensing structure for which the electrical sensing signal is transmitted. For example, the matrix configuration signals 101 may sequentially enable an electrical path from each stress sensing structure comprising the sensing cell matrix 102. In addition, the sensing cell control logic 106 may configure the voltage conversion circuitry and the common mode loop circuitry based on the sensing type of the selected stress sensing structure utilizing the front-end configuration signals 105. The voltage conversion circuitry and common mode loop circuitry are further described in relation to FIG. 4 - FIG. 6.

As further depicted in FIG. 1, the example stress sensing device 100 includes front-end conversion circuitry 104. The front-end conversion circuitry 104 comprises hardware and/or software configured to generate an output stress voltage 107 based on the electrical sensing signal 103 received from the stress sensing structure. The front-end conversion circuitry 104 is configured to receive electrical sensing signals 103 from each stress sensing structure sensing type and generate an output stress voltage 107 representative of a component or combination of components of mechanical stress detected by the particular stress sensing structure. For example, the generation of an output stress voltage 107 based on the electrical sensing signal 103 may depend on the sensing type of the stress sensing structure. A stress sensing structure comprising a Wheatstone Bridge sensing type may generate an electrical sensing signal 103 in which a voltage variation indicates a component of the mechanical stress. However, a stress sensing structure comprising a current mirror configuration sensing type may generate an electrical sensing signal 103 in which a current variation indicates a component of the mechanical stress.

The front-end conversion circuitry 104 is configured to generate an output stress voltage 107 representing each sensing type. As further depicted in FIG. 4, the voltage conversion circuitry of the front-end conversion circuitry 104 includes a plurality of electrical paths that may be configured based on the sensing type of the stress sensing structure. By including the conversion circuitry for each sensing type in a single circuit, the stress sensing device 100 may be implemented with limited area.

In addition, the front-end conversion circuitry 104 is configured to generate a bias signal 113 based on the output stress voltage 107. The bias signal 113 is transmitted to the corresponding stress sensing structure to bias the stress sensing structure enabling operation of the sensing cell matrix 102 in the proper biasing conditions and improving the output stress voltages 107 derived from the electrical sensing signals 103. As further depicted in FIG. 6, the common mode loop circuitry of the front-end conversion circuitry 104 includes a plurality of electrical paths that may be configured based on the sensing type of the stress sensing structure. By including the common mode biasing circuitry for each sensing type in a single circuit, the stress sensing device 100 may be implemented with limited area.

As further depicted in FIG. 1, the example stress sensing device 100 includes an ADC 108. An ADC 108 comprises circuitry configured to convert an analog signal, such as voltage, light, sound, etc. into a digital signal that may be processed by the DSP 110. As described herein, the ADC 108 of the example stress sensing device 100 may receive and output stress voltage 107 representing a component of the mechanical stress at a location of the semiconductor material and output a digital stress voltage 109 representing the output stress voltage 107 in digital form.

As further depicted in FIG. 1, the example stress sensing device 100 includes a DSP 110. A DSP 110 comprises one or more processors and associated circuitry configured to receive a plurality of digital stress voltages 109 and generate a mechanical stress distribution 111 based on the plurality of digital stress voltages 109. For example, the DSP 110 may be configured to receive the digital stress voltage 109 associated with each stress sensing structure in a sensing cell group. Based on the sensing type, doping type, and/or orientation of the stress sensing structure, the DSP 110 may combine the digital stress voltages 109 to determine a mechanical stress value.

A mechanical stress value indicates the mechanical stress measured at a location of a sensing cell group. The mechanical stress value may be determined based on the combination of components of the mechanical stress measured by each stress sensing structure. For example, a first stress sensing structure of the sensing cell group may be configured to determine a mechanical stress in one planar direction, a second stress sensing structure of the sensing cell group may be configured to determine a mechanical stress in a second planar direction, and a third stress sensing structure of the sensing cell group may be configured to determine a mechanical stress in a third planar direction. The DSP 110 may be configured to combine the mechanical stresses and to determine the mechanical stress value representing the mechanical stress at the sensing cell group. In another example, a first stress sensing structure of the sensing cell group may be configured to determine a summation of mechanical stresses in two orthogonal planar directions, a second stress sensing structure of the sensing cell group may be configured to determine a difference of mechanical stresses in two orthogonal planar directions, and a third stress sensing structure of the sensing cell group may be configured to determine a portion of the mechanical stress at an orientation different from the first two stress sensing structures, for example, shear stress. Once again, the DSP 110 may be configured to combine the mechanical stresses and to determine the mechanical stress value representing the mechanical stress at the sensing cell group.

As further depicted in FIG. 1, the DSP 110 is configured to generate a mechanical stress distribution 111. A mechanical stress distribution 111 is a representation of the mechanical stress across a semiconductor material. In some embodiments, a plurality of sensing cell groups may be distributed across the surface of a semiconductor material. The DSP 110 may utilize the digital stress voltages 109 from each stress sensing structure to determine the mechanical stress value at each sensing cell group. In addition, the DSP 110 may correlate the mechanical stress value with a physical position on a surface of the semiconductor material. For example, a mechanical stress value may be associated with a row and column in the sensing cell matrix 102 and the mechanical stress value may be stored in a data structure according to the physical position of the sensing cell group, for example, a two-dimensional array. The DSP 110 may be configured to determine the mechanical stress distribution 111 based on the plurality of mechanical stress values observed by each of the sensing cell groups. In some embodiments, the DSP 110 may be configured to predict the mechanical stress distribution 111 of areas of the surface of the semiconductor material based between sensing cell groups based on the mechanical stress values of nearby sensing cell groups. An example mechanical stress distribution 111 is further described in relation to FIG. 10.

Referring now to FIG. 2, an example embodiment of a stress sensing device 100 is provided. As depicted in FIG. 2, the stress sensing device includes a sensing cell matrix 102 comprising a plurality of sensing cell groups 220, each including a plurality of stress sensing structures 222. The sensing cell matrix 102 is disposed on a surface of a semiconductor material 218. The sensing cell matrix 102 is configured to transmit electrical sensing signals 103 based on the mechanical stress on the semiconductor material 218 to the front-end conversion circuitry 104. The front-end conversion circuitry 104 includes voltage conversion circuitry 224 configured to receive an electrical sensing signal 103 and generate a stress voltage 225. The front-end conversion circuitry 104 further includes voltage gain circuitry 226 configured to receive the stress voltage 225 and generate an amplified output stress voltage 107. In addition, the front-end conversion circuitry 104 includes common mode loop circuitry 228 configured to generate bias signals 113 based on the stress voltage 225 and the sensing type of the stress sensing structure 222. As further depicted in FIG. 2, the example stress sensing device 100 includes sensing cell control logic 106 configured to utilize matrix configuration signals 101 to configure the sensing cell matrix 102 and front-end configuration signals 105 to configure the front-end conversion circuitry 104. The stress sensing device 100 of FIG. 2 further includes an ADC 108 configured to receive output stress voltages 107 and generate digital stress voltages 109. The DSP 110 as depicted in FIG. 2 generates a mechanical stress distribution 111 based on the mechanical stress values derived from the digital stress voltages 109.

As FIG. 2 depicts, the example stress sensing device 100 includes a semiconductor material 218 and a sensing cell matrix 102 disposed on a surface of the semiconductor material 218. A semiconductor material 218 comprises any substance having electrical properties between a conductor and an insulator. Many electrical systems implement electrical components using a semiconductor material 218. The conductivity of a semiconductor material 218 may be altered based on the presence or absence of a voltage. In addition, some sensing elements may utilize changes in the electrical properties of a semiconductor material 218 to determine physical characteristics of a surrounding environment. For example, the resistance of a portion of a semiconductor material 218 may change in the presence of pressure on the surface of the semiconductor material 218. The change in resistance may be detected using electrical signals and analyzed to determine the pressure of the surrounding environment. Similarly, a temperature sensor may utilize changes in the electrical properties of a semiconductor material 218 to determine the temperature in a surrounding environment. Further, a MEMS gyroscope may utilize changes in electrical properties of a semiconductor material 218 to determine an angular rate of the semiconductor material.

As depicted in FIG. 2, sensing cell groups 220 may be distributed on the surface of a semiconductor material 218 to determine mechanical stress values at the location of the sensing cell group 220 on the surface of the semiconductor material 218. A sensing cell group 220 comprises a plurality of stress sensing structures 222, each stress sensing structure 222 exhibiting a different set of sensing characteristics. Some example sensing characteristics may include sensing type, doping type, and orientation.

A sensing type sensing characteristic refers to the electrical structure utilized by the stress sensing structure 222 to determine mechanical stress. For example, a Wheatstone Bridge sensing type may be utilized to measure a component of the mechanical stress in a semiconductor material 218. In another example, a current mirror configuration sensing type may be utilized to measure a component of the mechanical stress in a semiconductor material 218. The Wheatstone Bridge sensing type and the current mirror configuration sensing type are described in relation to FIG. 3.

A doping type sensing characteristic may also be varied within a sensing cell group 220 to adjust the component of mechanical stress measured by a stress sensing structure 222. For example, the doping type may affect the sensitivity of a stress sensing structure 222. In some instances, a p-type or n-type transistor may be varied to adjust the sensitivity of the stress sensing structure 222. In some embodiments, a stress sensing structure 222 comprising p-type transistors and a stress sensing structure 222 comprising n-type transistors may be included in a single sensing cell group 220.

An orientation sensing characteristic may also be varied within a sensing cell group 220 to adjust the component of mechanical stress measured by a stress sensing structure 222. An orientation is the relative position of one or more components of a stress sensing structure 222 relative to the orientation of the semiconductor material 218. In some embodiments, the component of the mechanical stress in a semiconductor material 218 may be changed based on the orientation of the electrical components comprising the stress sensing structure 222. For example, the channel of a transistor comprising a stress sensing structure 222 may shrink when a mechanical stress parallel to the transistor channel is applied, thus changing the electrical properties of the stress sensing structure 222. However, in an instance in which the electrical components of the stress sensing structure 222 are rotated on the surface of the semiconductor material 218, a different portion of mechanical stresses parallel to the new orientation of the stress sensing structure may be measured. Further, in some cases polycrystalline structures could be used to minimize sensitivity to stress orientation. Utilizing a sensing cell group 220 comprising stress sensing structures 222 with varied sensing characteristics ensures different portions of the mechanical stress in a particular area of the semiconductor material 218 are accurately measured.

As further depicted in FIG. 2, electrical sensing signals 103 are transmitted to the front-end conversion circuitry 104 from the sensing cell matrix 102 on the semiconductor material 218. The electrical sensing signals 103 originate from one of the stress sensing structures 222 in the sensing cell matrix 102. The sensing cell control logic 106 transmits matrix configuration signals 101 to configure the sensing cell matrix 102 from each of the stress sensing structures 222 comprising the sensing cell matrix 102. For example, the sensing cell control logic 106 may configure the sensing cell matrix 102 to sequentially transmit the electrical sensing signal 103 from each stress sensing structure 222 sequentially.

Due to the variation in sensing characteristics (e.g., sensing type, doping type, orientation) of the stress sensing structures 222 within a sensing cell group 220, the mechanical stress information derived from the electrical sensing signal 103 may vary based on the particular stress sensing structure 222. For example, a stress sensing structure 222 comprising a Wheatstone Bridge sensing type may cause a variation in the voltage of the electrical sensing signal 103 based on the mechanical stress. Or a stress sensing structure 222 comprising a current mirror configuration sensing type may cause a variation in the current of the electrical sensing signal 103 based on the mechanical stress.

As further depicted in FIG. 2, the front-end conversion circuitry 104 includes voltage conversion circuitry 224. The voltage conversion circuitry 224 comprises hardware and/or software configured to receive the electrical sensing signal 103 and generate a stress voltage 225 corresponding to the mechanical stress measured by the stress sensing structure 222. As described herein, the mechanical stress measurement may vary based on the sensing characteristics of the stress sensing structure 222. For example, some stress sensing structures 222 may indicate mechanical stress based on a variation in the voltage of the electrical sensing signal 103 while other stress sensing structures 222 indicate mechanical stress based on a variation in the current of the electrical sensing signal 103. The voltage conversion circuitry 224 is configured to generate a stress voltage 225 regardless of the sensing characteristics of the stress sensing structure 222. For example, in some embodiments, voltage conversion circuitry 224 may be configured to convert a variation in current to a stress voltage 225. A specific embodiment of voltage conversion circuitry 224 is further described in relation to FIG. 4.

As further depicted in FIG. 2, the sensing cell control logic 106 may transmit one or more front-end configuration signals 105 to coordinate the configuration of the voltage conversion circuitry 224 with the stress sensing structure 222 selected based on the matrix configuration signals 101. For example, the sensing cell control logic 106 may enable and/or disable one or more switches within the voltage conversion circuitry 224 to establish an electrical path through the voltage conversion circuitry 224 based on the stress sensing structure 222.

As further depicted in FIG. 2, the front-end conversion circuitry 104 includes voltage gain circuitry 226. Voltage gain circuitry 226 comprises any circuitry including hardware and/or software configured to amplify the stress voltage 225 representing the mechanical stress at a stress sensing structure 222 received from the voltage conversion circuitry 224. The voltage gain circuitry 226 may utilize any electrical components, for example, operational amplifiers, transistors, feedback resistors, input resistors, bias voltage sources, boosting circuitry, and so on. An example embodiment of voltage gain circuitry 226 is described in relation to FIG. 4.

As further depicted in FIG. 2, the front-end conversion circuitry 104 includes common mode loop circuitry 228. The common mode loop circuitry 228 comprises circuitry including hardware and/or software configured to generate a common mode signal (e.g., bias signals 113) at each of the stress sensing structures 222 of the sensing cell matrix 102 during measurement. The common mode loop circuitry 228 may be configured to derive the bias signals 113 from the stress voltage 225 generated by the voltage conversion circuitry 224. As with the voltage conversion circuitry 224, the bias signals 113 may depend on the sensing characteristics of the intended stress sensing structure 222. For example, some stress sensing structures 222 may be configured to receive a bias current and some stress sensing structures 222 may be configured to receive a bias voltage. The sensing cell control logic 106 may be configured to coordinate the configuration of the common mode loop circuitry 228 with the measured stress sensing structure 222. An example embodiment of common mode loop circuitry 228 is further described in relation to FIG. 6.

Referring now to FIG. 3, non-limiting examples of stress sensing structures 332-336 are provided. Although three stress sensing structures 332-336 are depicted, any stress sensing structure may be utilized in a sensing cell group 220. In addition, the sensing characteristics of each stress sensing structure may be varied in any number of ways, for example the sensing type, the doping type, and the sensing orientation.

As depicted in FIG. 3, the stress sensing structure 332 comprises a Wheatstone Bridge sensing type at a zero degree orientation relative to the semiconductor orientation 338 comprising sensing resistive elements 332a - 332d comprising a p-type doping and sensing resistive elements 332e-332h comprising an n-type doping.

As depicted in FIG. 3, the stress sensing structure 332 comprises a Wheatstone Bridge sensing type. A Wheatstone Bridge sensing type utilizes a plurality of resistive elements to convert a resistance of a semiconductor material to a voltage (e.g., electrical sensing signal 103a). As a semiconductor material experiences mechanical stress, the semiconductor material may be compressed and/or expanded. Such a compression and expansion may change the resistance of the semiconductor material. By arranging a plurality of resistive elements in a Wheatstone Bridge configuration and applying a bias voltage (e.g., bias signal 113a), the resistance may be converted into a voltage (e.g., electrical sensing signal 103a). Thus, the mechanical stress on the semiconductor material may be derived from the electrical sensing signal 103a.

As shown in FIG. 3, the stress sensing structure 332 includes four pairs of L-shaped resistive elements (332a, 332b; 332c, 332d; 332e, 332f; 332g, 332h). Two of the four pairs of resistive elements (332a, 332b; 332c, 332d) comprise p-type doping. Varying the doping type and concentration may affect the sensing properties of the stress sensing structure 332. For example, the p-type doped resistive elements 332a, 332b, 332c, 332d may be more sensitive to variation in the resistivity of the semiconductor material. As further depicted in FIG. 3, two of the four pairs of resistive elements (332e, 332f; 332g, 332h) comprise n-type doping. The n-type doped resistive elements 332e, 332f, 332g, 332h may alter the sensitivity to variation in the resistivity of the semiconductor material based at least in part on the piezoresistive coefficients involved.

Various sensing characteristics of the stress sensing structure 332 may be varied. For example, a stress sensing structure 332 may be configured with two pairs of L-shaped resistive elements. In addition, the doping type and/or doping concentration of the resistive elements may be adjusted. Further, the orientation of the resistive elements 332a, 332b, 332c, 332d, 332e, 332f, 332g, 332h relative to the semiconductor orientation 338 may be adjusted. For example, as depicted the orientation of the resistive elements 332a, 332d, 332e, 332h are at 0 degrees relative to the semiconductor orientation 338 while the resistive elements 332b, 332c, 332f, 332g are at 90 degrees relative to the semiconductor orientation 338. However, the orientation of the resistive elements 332a, 332b, 332c, 332d, 332e, 332f, 332g, 332h may be adjusted such that the resistive elements 332a, 332d, 332e, 332h are at 45 degrees relative to the semiconductor orientation 338 while the resistive elements 332b, 332c, 332f, 332g are at 315 degrees relative to the semiconductor orientation 338.

Variations in the sensing characteristics may enable the detection of various components of the mechanical stress on the semiconductor material at the location of the stress sensing structure 332, improving the determination of the mechanical stress value at the location. For example, as depicted in FIG. 3, the stress sensing structure 332 is optimized to detect the sum of the mechanical stress in the x-direction with reference to the semiconductor orientation 338 with the mechanical stress in the y-direction with reference to the semiconductor orientation 338 at the stress sensing structure 332. In some embodiments, the determination of mechanical stress represented by the depicted stress sensing structure 332 may be represented by Equation (1):

$$(1)\ \sigma_{xx} + \sigma_{yy} \approx \frac{4}{\pi_{11}^{n} + \pi_{12}^{n} - \pi_{11}^{p} - \pi_{12}^{p}} \frac{V_O}{V_{BIAS}}$$

where $\sigma_{xx}$ is the mechanical stress in the x-direction relative to the semiconductor orientation 338; $\sigma_{yy}$, is the mechanical stress in the y-direction relative to the semiconductor orientation 338; $V_O$ is the voltage representing the mechanical stress on the semiconductor material (electrical sensing signal 103a); $V_{BIAS}$ is the bias voltage supplied to the stress sensing structure 332 (e.g., bias signal 113); and $\pi_{11}^{n}, \pi_{12}^{n}, \pi_{11}^{p}$, and $\pi_{12}^{p}$ represent the piezo-resistive properties of the doped silicon materials of the respective sensing element pairs (332g, 332h; 332e, 332f; 332c, 332d; 332a, 332b).

As further depicted in FIG. 3, the stress sensing structure 334 comprises a current mirror configuration sensing type of n-type doping type, oriented in a 45°/315° orientation. Similarly, the stress sensing structure 336 comprises a current mirror configuration sensing type of p-type doping type, oriented in a 0°/90° orientation. A current mirror configuration sensing type utilizes a plurality of transistors 334a, 334b, 334c, 334d; 336a, 336b, 336c, 336d arranged in a current mirror configuration, to detect a change in current within a semiconductor material. The change in current may indicate the mechanical stress on the semiconductor material at the stress sensing structure 334, 336. The electrical sensing signal 103b, 103c may be generated from the source terminals of the transistors 334a, 334b, 334c, 334d, 336a, 336b, 336c, 336d comprising the current mirror configuration. As further depicted in FIG. 3, the gate voltage at each of the transistors 334a, 334b, 334c, 334d, 336a, 336b, 336c, 336d is biased according to a bias voltage (e.g., bias signal 113b, 113c). The mechanical stress of the semiconductor may be measured based on variations of the electrical sensing signal 103b, 103c. For example, variations in the current of the electrical sensing signal 103b, 103c.

As further depicted in FIG. 3, the stress sensing structure 334 is oriented at a 45°/315° orientation while the stress sensing structure 336 is oriented at a 0°/90° orientation. Variations in the orientation of the stress sensing structure 334, 336 may enable the detection of various components of the mechanical stress on the semiconductor material at the location of the stress sensing structure 334, 336, improving the determination of the mechanical stress value at the location. For example, a change in orientation of the stress sensing structures 334, 336 changes the angle of the transistor channels comprising the transistors 334a, 334b, 334c, 334d, 336a, 336b, 336c, 336d causing variance in the compression and expansion of the transistor channels based on the orientation. For example, as depicted in FIG. 3, the orientation of the stress sensing structure 336 is optimized to detect the difference of the mechanical stress in the x-direction with reference to the semiconductor orientation 338 compared to the mechanical stress in the y-direction with reference to the semiconductor orientation 338 at the stress sensing structure 336. Further, the orientation of the stress sensing structure 334 is optimized to detect the shear mechanical stress at the stress sensing structure 334.

As further depicted in FIG. 3, the stress sensing structure 334 comprises transistors 334a, 334b, 334c, 334d having an n-type doping type, while the stress sensing structure 336 comprises transistors 336a, 336b, 336c, 336d having a p-type doping type. The doping type of the stress sensing structures 334, 336 may be altered to change the sensitivity of the stress sensing structure 334, 336. Each variation in sensing characteristic of the stress sensing structures 332, 334, 336 may enable determination of various components of the mechanical stress on the semiconductor material at the stress sensing structure 332, 334, 336.

As configured in FIG. 3, the stress sensing structure 334 is optimized to detect the shear mechanical stress with reference to the semiconductor orientation 338 of the semiconductor material. In some embodiments, the determination of mechanical stress represented by the depicted stress sensing structure 334 may be represented by Equation (2):

$$(2)\ \sigma_{xy} \approx \frac{1}{2}\frac{1}{\pi_{11}^{n} - \pi_{12}^{n}}\frac{(I_A + I_C) - (I_B + I_D)}{I_{CM}}$$

$$(3)\ I_{CM} = (I_A + I_B + I_C + I_D)/4$$

where $\sigma_{xy}$ is the shear mechanical stress; $I_A$, $I_B$, $I_C$, and $I_D$ are the currents at the respective source terminals of the transistors 334a, 334b, 334c, 334d; and $\pi_{11}^{n}, \pi_{12}^{n}$ are the piezo-resistive properties of the n-doped silicon material of the corresponding current mirrors.

As configured in FIG. 3, the stress sensing structure 336 is optimized to detect the difference of the mechanical stress in the x-direction with reference to the semiconductor orientation 338 with the mechanical stress in the y-direction with reference to the semiconductor orientation 338 at the stress sensing structure 336. In some embodiments, the determination of mechanical stress represented by the depicted stress sensing structure 336 may be represented by Equation (4):

$$(2)\ \sigma_{xx} - \sigma_{yy} \approx \frac{1}{\pi_{44}^{p}}\frac{(I_A + I_C) - (I_B + I_D)}{I_{CM}}$$

where $\sigma_{xx}$ is the mechanical stress in the x-direction relative to the semiconductor orientation 338; $\sigma_{yy}$ is the mechanical stress in the y-direction relative to the semiconductor orientation 338; $I_A$, $I_B$, $I_C$, and $I_D$ are the currents at the respective source terminals of the transistors 336a, 336b, 336c, 336d; and $\pi_{44}^{p}$ is the piezo-resistive property of the p-doped silicon material of the current mirror.

Referring now to FIG. 4, an example embodiment of voltage conversion circuitry 224 electrically coupled with a sensing cell matrix 102 and voltage gain circuitry 226 is provided. As depicted in FIG. 4, the sensing cell matrix 102 is configured to generate an electrical sensing signal 103 from each stress sensing structure 332, 334, 336 comprising a sensing cell group 220 of a plurality of sensing cell groups 220. The voltage conversion circuitry 224 is further configured to generate a stress voltage 225 representing the component of mechanical stress detected by the stress sensing structure 332, 334, 336. The voltage conversion circuitry 224 is configurable, for example by sensing cell control logic (e.g., sensing cell control logic 106) to generate the stress voltage 225 based on the sensing characteristics of the stress sensing structure 332, 334, 336. As further depicted in FIG. 4, the voltage gain circuitry 226 is configured to pass and/or amplify the stress voltage 225 and generate an output stress voltage 107.

As depicted in FIG. 4, the voltage conversion circuitry 224 includes a switch 440 electrically coupling the positive terminal 103p of the electrical sensing signal 103 directly to the positive terminal 225p of the stress voltage 225 generated by the front-end conversion circuitry 244. In addition, the voltage conversion circuitry 224 includes a switch 442 electrically coupling the negative terminal 103n of the electrical sensing signal 103 directly to the negative terminal 225n of the stress voltage 225 generated by the front-end conversion circuitry 244.

As further depicted in FIG. 4, the voltage conversion circuitry 224 includes an n-type transistor 412 having a source terminal 412s electrically coupled to the negative terminal 103n of the electrical sensing signal 103 and a drain terminal 414d of a p-type transistor 414; a gate terminal 412g electrically coupled to a second terminal 404b of a resistor 404, an input terminal of a current source 406, and a gate terminal 418g of an n-type transistor 418; and a drain terminal 412d electrically coupled to a source terminal 414s of the transistor 414. As further depicted in FIG. 4, the first terminal 404a of the resistor 404 is electrically coupled to a switch 402a which is electrically coupled to a voltage source 408, and a switch 402b electrically coupled to a ground 410. The output terminal of the current source 406 is electrically coupled to the ground 410.

As further depicted in Fig. 4, the gate terminal 414g of the transistor 414 is electrically coupled to a gate terminal 416g of a p-type transistor 416, a first terminal 424a of a resistor 424, and an output terminal of a current source 422; the source terminal 414s of the transistor 414 is further electrically coupled to a first terminal 430a of a resistor 430 and the negative terminal 225n of the stress voltage 225. The input terminal of the current source 422 is electrically coupled to the voltage source 408. The drain terminal 416d of the transistor 416 is electrically coupled to the positive terminal 103p of the electrical sensing signal 103 and the source terminal of the transistor 418; and the source terminal 416s is electrically coupled to the positive terminal 225p of the stress voltage 225, the drain terminal 418d of the transistor 418, and the first terminal 434a of a resistor 434.

The example voltage conversion circuitry 224 further includes a switch 420 electrically coupled to a voltage source 408 and the second terminal 424b of the resistor 424; and a switch 426 electrically coupled to a ground 410 and the second terminal 424b of the resistor 424.

As further depicted in FIG. 4, the second terminal of the resistor 430 is electrical coupled to a switch 428 which is electrically coupled to a voltage source 408, and electrically coupled to a first terminal 432a of a switch 432. The second terminal 432b of the switch 432 is electrically coupled to a ground 410 and a second terminal 436b of a switch 436. The second terminal 434b of the resistor 434 is electrically coupled to a switch 438 which is electrically coupled to a voltage source 408. The second terminal 434b of the resistor 434 is also electrically coupled to a first terminal 436a of the switch 436.

FIG. 4 further provides an example embodiment of a voltage gain circuitry 226. As depicted in FIG. 4, the voltage gain circuitry 226 includes receives a stress voltage 225 at a positive terminal 225p and a negative terminal 225n, as input. The voltage gain circuitry 226 is configured to output an output stress voltage 107 on a positive terminal 107p and a negative terminal 107n.

As depicted in FIG. 4, the example voltage gain circuitry 226 includes a first operational amplifier 444a comprising a positive input terminal 444a_p, a negative input terminal 444a_n, and an output terminal 444a_o. The example voltage gain circuitry 226 further includes a second operational amplifier 444b comprising a positive input terminal 444b_p, a negative input terminal 444b_n, and an output terminal 444b_o. The positive terminal 225p of the stress voltage 225 is electrically coupled to the positive input terminal 444a_p of the operational amplifier 444a. The negative input terminal 444a_n of the operational amplifier 444a is electrically coupled to a first terminal 446a of a variable resistor 446. The second terminal 446b of the variable resistor 446 is electrically coupled to the output terminal 444a_o of the first operational amplifier 444a. The output terminal 444a_o of the first operational amplifier 444a is further electrically coupled to the positive terminal 107p of the output stress voltage 107. The negative terminal 225n of the stress voltage 225 is electrically coupled to the positive input terminal 444b_p of the operational amplifier 444b. The negative input terminal 444b_n of the operational amplifier 444ab is electrically coupled to a first terminal 448a of a variable resistor 448. The second terminal 448b of the variable resistor 448 is electrically coupled to the output terminal 444b_o of the second operational amplifier 444b. The output terminal 444b_o of the second operational amplifier 444b is further electrically coupled to the negative terminal 107n of the output stress voltage 107.

Referring now to FIG. 5, three distinct electrical paths 552, 554, 556 within the voltage conversion circuitry as depicted in FIG. 4 may be enabled based on the sensing characteristics of the enabled stress sensing structure (e.g., stress sensing structure 332, 334, 336). For example, the first electrical path 552 may be enabled in an instance in which a stress sensing structure having a Wheatstone Bridge sensing type (e.g., stress sensing structure 332) is enabled. The second electrical path 554 may be enabled in an instance in which a stress sensing structure having a current mirror configuration comprising n-type transistors (e.g., stress sensing structure 334) is enabled. The third electrical path 556 may be enabled in an instance in which a stress sensing structure having a current mirror configuration comprising p-type transistors (e.g., stress sensing structure 336) is enabled. In some embodiments, the sensing cell control logic 106 may enable a corresponding electrical path 552 in coordination with enabling a stress sensing structure 332, 334, 336.

As depicted in FIG. 5, the first electrical path 552 may be enabled by closing switch 440 and switch 442 while opening switches 402a, 402b, 420, 426, 428, 432, and 436. Closing switch 440 and switch 442 pass the electrical sensing signal 103 directly to the stress voltage 225 output. The first electrical path 552 may be enabled in an instance in which the mechanical stress causes a variation in the voltage of the electrical sensing signal 103, for example, with a stress sensing structure similar to stress sensing structure 332.

As further depicted in FIG. 5, the second electrical path 554 may be enabled by closing switch 402a, switch 402b, switch 428, and switch 438 while opening switches 420, 426, 432, 436, 440, and 442. Closing switch 402a, switch 402b, switch 428, and switch 438 will utilize the n-type transistors to generate a stress voltage 225 representing the mechanical stress measured at a stress sensing structure. The second electrical path 554 may be enabled in an instance in which the mechanical stress causes a variation in the current of the electrical sensing signal 103 and the stress sensing structure utilizes n-type electrical components, for example, with a stress sensing structure similar to stress sensing structure 334.

As further depicted in FIG. 5, the third electrical path 556 may be enabled by closing switch 420, switch 426, switch 432, and switch 436 while opening switches 402a, 402b, 428, 438, 440, and 442. Closing switch 420, switch 426, switch 432, and switch 436 will utilize the p-type transistors to generate a stress voltage 225 representing the mechanical stress measured at a stress sensing structure. The third electrical path 556 may be enabled in an instance in which the mechanical stress causes a variation in the current of the electrical sensing signal 103 and the stress sensing structure utilizes p-type electrical components, for example, with a stress sensing structure similar to stress sensing structure 336.

The depicted circuitry of FIG. 4 and FIG. 5 comprising the voltage conversion circuitry 224 enable the generation of a stress voltage 225 in which the voltage of the signal varies based on the mechanical stress measured at the particular stress sensing structure. By supporting the conversion of electrical sensing signals 103 from multiple combinations of sensing characteristics, the area required to enable accurate detection of a mechanical stress distribution may be reduced.

Referring now to FIG. 6, an example embodiment of common mode loop circuitry 228 is provided. As described herein, the common mode loop circuitry 228 may be configured to generate a bias signal 229a, 229b based on the enabled stress sensing structure.

As depicted in FIG. 6, the common mode loop circuitry 228 includes an operational amplifier 602 comprising a negative terminal 602n, a positive terminal 602p, and an output terminal 602o. The negative terminal is configured to receive an average voltage 600 from the voltage gain circuitry 226 based on the stress voltage 225 generated by the voltage conversion circuitry 224. As depicted in FIG. 6, the voltage gain circuitry 226 may include a voltage divider comprising two resistors 614, 616. The average voltage 600 may be received based on the center value at the two resistors 614, 616. In some embodiments, the two resistors 614, 616 may have equal resistance values, thus, the derived average voltage 600 is the average of the stress voltage 225 received at the positive and negative terminals of the voltage gain circuitry 226.

As further depicted in FIG. 6, the positive terminal 602p of the operational amplifier 602 is configured to receive a reference voltage. The output terminal 602o of the operational amplifier 602 is electrically coupled to a gate terminal 604g of a transistor 604. The transistor 604 further includes a drain terminal 604d electrically coupled to ground, a bulk terminal 604b electrically coupled to the drain terminal 604d, and a source terminal 604s. The source terminal 604s of the transistor 604 is electrically coupled to a switch 606 which when closed completes an electrically coupling between the source terminal 604s of the transistor 604 and the bias signal 229a. The gate terminal 604g is electrically coupled to the bias signal 229b. The bias signal 229a may be used as a bias voltage for a stress sensing structure having a Wheatstone Bridge sensing type. The bias signal 229b may be used as a gate voltage for the transistors comprising the stress sensing structures having a current mirror configuration. The closing of the switches 608, 610, and 612 may be coordinated to ensure the bias signal 229a, 229b is set based on the measured stress sensing structure. In some examples, the sensing cell control logic may be used to coordinate the enabling/disabling of switches 608, 610, and 612.

Referring now to FIG. 7, an example stress sensing device 100 comprising a temperature sensor 702 configured to compensate one or more mechanical stress values to generate a compensated mechanical stress value 708 is provided. As depicted in FIG. 7, the example stress sensing device 100 includes a sensing cell matrix 102 configured to transmit a plurality of electrical sensing signals 103 to front-end conversion circuitry 104 comprising voltage conversion circuitry 224, voltage gain circuitry 226, and common mode loop circuitry 228. The front-end conversion circuitry 104 generates bias signals 113 configured to bias the measured stress sensing structure of the sensing cell matrix 102. The front-end conversion circuitry is further configured to generate output stress voltages 107 for each stress sensing structure of the sensing cell matrix 102. The ADC 108 is configured to generate a digital stress voltage 109 based on the output stress voltages 107.

As depicted in FIG. 7, the DSP 110 includes temperature compensation circuitry 704. Temperature compensation circuitry 704 is any circuitry including hardware and/or software configured to receive a temperature from a temperature sensor 702 and generate a temperature compensated mechanical stress voltage 708 based on the digital stress voltage 109 and the temperature. The electrical properties of a semiconductor material may be heavily dependent on the temperature of the semiconductor material and the temperature of the surrounding environment. As such, a temperature sensor 702 may be configured to measure and transmit temperature measurements to the DSP 110 to compensate the digital stress voltage 109 received from a stress sensing structure. For example, an increase in temperature of a semiconductor material may increase the conductivity of the semiconductor material. An increase in conductivity is correlated with a decrease in resistance of the semiconductor material. The temperature compensation circuitry 704 of the DSP 110 may be configured to generate the temperature compensated mechanical stress voltage 708 thereby adjusting the mechanical stress values and resulting mechanical stress distribution of the semiconductor material.

Referring now to FIG. 8, an example sensing system (or apparatus) 880 comprising a stress sensing device 100 (e.g., mechanical stress measurement apparatus) is depicted. As depicted in FIG. 8, the stress sensing device 100 is configured to generate a stress value 808. A stress value 808 may comprise a mechanical stress value corresponding to a mechanical stress measured by a sensing cell group at a location on a semiconductor material. A stress value 808 may further comprise a mechanical stress distribution (e.g., mechanical stress distribution 111) modeling the mechanical stress across a semiconductor material. In addition, mechanical stress values 808 may be stored as stored stress values 810 in a memory 804, enabling determination of historical stress values 808 based on the stored stress values 810 for a semiconductor material. Stress values 808 and stored stress values 810 may be utilized by a digital compensation unit 800 to compensate the measured output 806 of a sensing element 802.

A sensing element 802 is any device configured to determine a physical characteristic of a surrounding environment based on the electrical properties of a material. For example, sensing elements 802 may utilize the resistivity of a material to determine pressure, temperature, or other physical properties of an environment to which the material is exposed or interacts with. Non-limiting examples of sensing elements 802 include pressure sensors, temperature sensors, light sensors, MEMS gyroscopes, and so on. The measured output 806 of the sensing element 802 may be affected by mechanical stress on the material due to unrelated external forces.

A digital compensation unit (DCU) 800 comprises one or more processors configured to apply a compensation to the measured output 806 of a sensing element 802 based on stress values 808 received from a stress sensing device 100 and stored stress values 810 from a memory 804 configured to store historical stress values 808. The DCU 800 generates a stress-compensated measured output 812 representing the measured output 806 of the sensing element 802 compensated based on the stress values 808 observed by a stress sensing device 100 configured according to one or more embodiments of the present disclosure. The stress-compensated measured output 812 may provide significant improvements to the measured output 806 of a sensing element 802.

Referring now to FIG. 9, a process 900 for determining a mechanical stress distribution (e.g., mechanical stress distribution 111) on a semiconductor material (e.g., semiconductor material 218) is provided. At block 902, a processor (e.g., DSP 110) receives a stress voltage (e.g., digital stress voltage 109) from a plurality of stress sensing structures (e.g., stress sensing structure 222, 332, 334, 336) disposed on a surface of the semiconductor material and comprising a sensing cell group (e.g., sensing cell group 220), wherein the stress voltage represents a component of a mechanical stress on the semiconductor material at the sensing cell group, wherein each stress sensing structure comprising the sensing cell group exhibits a unique combination of sensing characteristics, and wherein a plurality of sensing cell groups are disposed on the surface of the semiconductor material in a sensing cell matrix (e.g., sensing cell matrix 102). As described herein, a sensing cell group includes a plurality of stress sensing structures configured to determine a component of mechanical stress on the semiconductor material at the sensing cell group. Each stress sensing structure of the sensing cell group is configured with a unique combination of sensing characteristics such that each sensing cell structure within the sensing cell group measures a unique component of the mechanical stress on the semiconductor material at the sensing cell group. For example, unique combination of the sensing type, the doping type, and the orientation may result in the measurement of unique components of the sensing cell structure.

At block 904, the processor determines a plurality of mechanical stress values representing the mechanical stress on the semiconductor material at the sensing cell group for each sensing cell group comprising the sensing cell matrix. The various digital stress voltages measured by each unique stress sensing structure of a sensing cell group may be combined to determine a mechanical stress value representing the total mechanical stress on the semiconductor material at the sensing cell group. For example, a sensing cell group may include a first stress sensing structure configured to measure mechanical stress in a first direction (e.g., x-direction) in a semiconductor material. The sensing cell group may further include a second stress sensing structure configured to measure mechanical stress in a second direction, orthogonal to the first direction (e.g., y-direction). The two measurements may be combined to determine a mechanical stress value representing the total mechanical stress on the semiconductor material at the sensing cell group. In other examples, the sum of the components of the mechanical stress may be measured by one stress sensing structure in the sensing cell group, while the difference of the mechanical stress is measured by a second stress sensing structure, and the shear stress is measured by a third stress sensing structure in the sensing cell group. In such an example, each mechanical stress may be combined to determine a mechanical stress value representing the total mechanical stress on the semiconductor material at the sensing cell group.

At block 906, the controller determines a mechanical stress distribution representing the mechanical stress on the semiconductor material based on the plurality of mechanical stress values. The mechanical stress values represent the mechanical stress on the semiconductor material at one location, the location of the sensing cell group. However, the sensing cell matrix includes a plurality of sensing cell groups distributed across the surface of the semiconductor material. As described herein, the controller may determine a mechanical stress distribution representing the mechanical stress across the semiconductor material. Mechanical stress values may be averaged, combined, averaged over time, filtered, or otherwise utilized to determine the mechanical stress distribution. In some embodiments, the mechanical stress values may be stored in a data structure based on the position of the sensing cell group to represent the mechanical stress distribution.

Referring now to FIG. 10, example mechanical stress distributions 1000a - 1000c are provided. As depicted in FIG. 10, a processor (e.g., DSP 110) may determine mechanical stress values 1008a - 1008c at each sensing cell group location. The mechanical stress value 1008a - 1008c may be determined based on the components of mechanical stress returned by each stress sensing structure comprising the sensing cell group. As further depicted in FIG. 10, the mechanical stress values 1008a - 1008c may be stored according to the location of the sensing cell group on the semiconductor material. For example, in an instance in which the sensing cell groups of a sensing cell matrix are arranged in rows and columns across a surface of the semiconductor material, the mechanical stress value 1008a - 1008c determined at each sensing cell group may be stored according to a row and column location. As illustrated in FIG. 10, the mechanical stress values 1008a - 1008c each correspond to a row 1002a - 1002c and column 1004a - 1004c within the sensing cell matrix. In some embodiments, the array of mechanical stress values 1008a - 1008c may be combined or filtered based on physical proximity to generate a mechanical stress distribution 1000a - 1000c representing the entirety of the semiconductor material.

Referring now to FIG. 11, FIG. 11 illustrates an example DSP 110 in accordance with at least some example embodiments of the present disclosure. The DSP 110 includes processor 1102, input/output circuitry 1104, data storage media 1106, and communications circuitry 1108. In some embodiments, the DSP 110 is configured, using one or more of the sets of circuitry 1102, 1104, 1106, and/or 1108, to execute and perform the operations described herein.

Although components are described with respect to functional limitations, it should be understood that the particular implementations necessarily include the use of particular computing hardware. It should also be understood that in some embodiments certain components described herein include similar or common hardware. For example, two sets of circuitry may both leverage use of the same processor(s), network interface(s), storage medium(s), and/or the like, to perform their associated functions, such that duplicate hardware is not required for each set of circuitry. The user of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Alternatively or additionally, in some embodiments, other elements of the DSP 110 provide or supplement the functionality of other particular sets of circuitry. For example, the processor 1102 in some embodiments provides processing functionality to any of the sets of circuitry, the data storage media 1106 provides storage functionality to any of the sets of circuitry, the communications circuitry 1108 provides network interface functionality to any of the sets of circuitry, and/or the like.

In some embodiments, the processor 1102 (and/or co-processor or any other processing circuitry assisting or otherwise associated with the processor) is/are in communication with the data storage media 1106 via a bus for passing information among components of the DSP 110. In some embodiments, for example, the data storage media 1106 is non-transitory and may include, for example, one or more volatile and/or non-volatile memories. In other words, for example, the data storage media 1106 in some embodiments includes or embodies an electronic storage device (e.g., a computer readable storage medium). In some embodiments, the data storage media 1106 is configured to store information, data, content, applications, instructions, or the like, for enabling the DSP 110 to carry out various functions in accordance with example embodiments of the present disclosure.

The processor 1102 may be embodied in a number of different ways. For example, in some example embodiments, the processor 1102 includes one or more processing devices configured to perform independently. Additionally, or alternatively, in some embodiments, the processor 1102 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the DSP 110, and/or one or more remote or "cloud" processor(s) external to the DSP 110.

In an example embodiment, the processor 1102 is configured to execute instructions stored in the data storage media 1106 or otherwise accessible to the processor. Alternatively, or additionally, the processor 1102 in some embodiments is configured to execute hard-coded functionality. As such, whether configured by hardware or software methods, or by a combination thereof, the processor 1102 represents an entity (e.g., physically embodied in circuitry) capable of performing operations according to an embodiment of the present disclosure while configured accordingly. Alternatively, or additionally, as another example in some example embodiments, when the processor 1102 is embodied as an executor of software instructions, the instructions specifically configure the processor 1102 to perform the algorithms embodied in the specific operations described herein when such instructions are executed.

In some embodiments, the DSP 110 includes input/output circuitry 1104 that provides output to the user and, in some embodiments, to receive an indication of a user input. In some embodiments, the input/output circuitry 1104 is in communication with the processor 1102 to provide such functionality. The input/output circuitry 1104 may comprise one or more user interface(s) (e.g., user interface) and in some embodiments includes a display that comprises the interface(s) rendered as a web user interface, an application user interface, a user device, a backend system, or the like. The processor 1102 and/or input/output circuitry 1104 comprising the processor may be configured to control one or more functions of one or more user interface elements through computer program instructions (e.g., software and/or firmware) stored on a memory accessible to the processor (e.g., data storage media 1106, and/or the like). In some embodiments, the input/output circuitry 1104 includes or utilizes a user-facing application to provide input/output functionality to a client device and/or other display associated with a user.

In some embodiments, the DSP 110 includes communications circuitry 1108. The communications circuitry 1108 includes any means such as a device or circuitry embodied in either hardware or a combination of hardware and software that is configured to receive and/or transmit data from/to a network and/or any other device, circuitry, or module in communication with the DSP 110. In this regard, the communications circuitry 1108 includes, for example in some embodiments, a network interface for enabling communications with a wired or wireless communications network. Additionally, or alternatively in some embodiments, the communications circuitry 1108 includes one or more network interface card(s), antenna(s), bus(es), switch(es), router(s), modem(s), and supporting hardware, firmware, and/or software, or any other device suitable for enabling communications via one or more communications network(s). Additionally, or alternatively, the communications circuitry 1108 includes circuitry for interacting with the antenna(s) and/or other hardware or software to cause transmission of signals via the antenna(s) or to handle receipt of signals received via the antenna(s). In some embodiments, the communications circuitry 1108 enables transmission to and/or receipt of data from a client device in communication with the DSP 110.

Additionally, or alternatively, in some embodiments, one or more of the sets of circuitry 1102-1108 are combinable. Additionally, or alternatively, in some embodiments, one or more of the sets of circuitry perform some or all of the functionality described associated with another component. For example, in some embodiments, one or more sets of circuitry 1102-1108 are combined into a single module embodied in hardware, software, firmware, and/or a combination thereof. Similarly, in some embodiments, one or more of the sets of circuitry is/are combined such that the processor 1102 performs one or more of the operations described above with respect to each of these circuitry individually.

While this detailed description has set forth some embodiments of the present invention, the appended claims cover other embodiments of the present invention which differ from the described embodiments according to various modifications and improvements. For example, one skilled in the art may recognize that such principles may be applied to any electronic device that relies on measurements of electrical properties of a semiconductor substrate. For example, MEMS gyroscopes, inertial measurement units, accelerometers, pressure sensors, temperature sensors, and so on.

Use of broader terms such as "comprises," "includes," and "having" should be understood to provide support for narrower terms such as "consisting of," "consisting essentially of," and "comprised substantially of". Use of the terms "optionally," "may," "might," "possibly," and the like with respect to any element of an embodiment means that the element is not required, or alternatively, the element is required, both alternatives being within the scope of the embodiment(s). Also, references to examples are merely provided for illustrative purposes, and are not intended to be exclusive.

The examples and embodiments described herein may be combined to provide further solutions falling within the scope of the invention as defined by the appended claims.

## Claims

1. An apparatus (100; 880) comprising:

    a sensing cell group (220) disposed on a surface of a semiconductor material (218), the sensing cell group comprising:

    a plurality of stress sensing structures (222; 332, 334, 336) each comprising a different combination of sensing characteristics and configured to:

        detect a component of a mechanical stress on the semiconductor material; and
        generate an electrical signal (103; 103a, 103b, 103c) representing the component of the mechanical stress; and

    voltage conversion circuitry (104; 224) configured to receive the electrical signal representing the component of the mechanical stress from each stress sensing structure and generate a stress voltage (107; 225) representing the component of the mechanical stress;
    wherein the stress voltages from each stress sensing structure of a sensing cell group are combined to determine a mechanical stress value (708; 808) representing the mechanical stress on the semiconductor material at the sensing cell group.

2. The apparatus of claim 1, wherein the sensing characteristics comprise at least one of a sensing type, a doping type, and an orientation.

3. The apparatus of claim 2, wherein the sensing type comprises at least one of a Wheatstone Bridge sensing type and a current mirror configuration sensing type.

4. The apparatus of claim 2 or 3, wherein the orientation refers to a position of the stress sensing structure (222; 332, 334, 336) relative to a semiconductor orientation (338) of the semiconductor material (218).

5. The apparatus of any of claims 1-4, wherein the sensing cell group (220) comprises at least:

    a first stress sensing structure (332) having a Wheatstone Bridge sensing type;
    a second stress sensing structure (334) having a current mirror configuration sensing type comprising a first plurality of transistors (334a, 334b, 334c, 334d), wherein each transistor of the first plurality of transistors has an n-type doping type; and
    a third stress sensing structure (336) having a current mirror configuration sensing type comprising a second plurality of transistors (336a, 336b, 336c, 336d), wherein each transistor of the second plurality of transistors has an p-type doping type.

6. The apparatus of claim 5, wherein a first portion (334a, 334c) of the first plurality of transistors are positioned at a 45-degree angle relative to the semiconductor orientation (338), and wherein a second portion (334b, 334d)of the first plurality of transistors are positioned at a negative 45-degree angle relative to the semiconductor orientation (338).

**7.** The apparatus of claim 5 or 6, wherein a first portion (336b, 336d) of the second plurality of transistors are positioned at a 0-degree angle relative to the semiconductor orientation (338), and wherein a second portion (336a, 336c) of the second plurality of transistors are positioned at a 90-degree angle relative to the semiconductor orientation (338).

**8.** The apparatus of any of the preceding claims, wherein the voltage conversion circuitry (224) comprises:

a first switch (440) configured to enable a first electrical path configured to generate a first stress voltage representing a first component of the mechanical stress measured by a first stress sensing structure (334); and
a second switch (442) configured to enable a second electrical path configured to generate a second stress voltage representing a second component of the mechanical stress measured by a second stress sensing structure (336),
wherein the sensing type of the first stress sensing structure is different than the sensing type of the second stress sensing structure.

**9.** The apparatus of any of the preceding claims, wherein the sensing cell group is a first sensing cell group (220), the apparatus further comprising a sensing cell matrix (102) comprising:

a plurality of sensing cell groups, including the first sensing cell group, disposed across a surface of the semiconductor material,
wherein a mechanical stress distribution representing the mechanical stress on the semiconductor material (218) is determined based on the mechanical stress value at each sensing cell group of the plurality of sensing cell groups.

**10.** The apparatus of claim 9, further configured to:
determine a mechanical stress distribution across the semiconductor material based on the mechanical stress value at each sensing cell group.

**11.** The apparatus of any of the preceding claims, further comprising common mode loop circuitry (228) configured to bias a stress sensing structure (222; 332, 334, 336) based on the stress voltage, in particular configured to provide a bias voltage for at least a first stress sensing structure and a bias current for at least a second stress sensing structure based on the stress voltage.

**12.** The apparatus of any of the preceding claims, further comprising a sensing element (802) comprising a material configured to determine a physical characteristic of an environment based on one or more electrical properties of the material,
wherein the physical characteristic is adjusted based on the mechanical stress value (708; 808) representing the mechanical stress on the semiconductor material at the sensing cell group.

**13.** The apparatus of the preceding claim, wherein the sensing element comprises a micro-electro-mechanical system, MEMS, gyroscope, wherein an output of the MEMS gyroscope is adjusted based on the mechanical stress on the semiconductor material.

**14.** The apparatus of any of the preceding claims, further comprising a temperature sensor (702), wherein the mechanical stress is adjusted based on a temperature received from the temperature sensor.

**15.** A method for determining a mechanical stress distribution on a semiconductor material, the method comprising:

receiving (902), at a processor, a stress voltage (107; 225) from a plurality of stress sensing structures (222; 332, 334, 336) disposed on a surface of a semiconductor material (218) and comprising a sensing cell group (220),

wherein the stress voltage represents a component of a mechanical stress on the semiconductor material at the sensing cell group,
wherein each stress sensing structure comprising the sensing cell group exhibits a unique combination of sensing characteristics, and
wherein a plurality of sensing cell groups are disposed on the surface of the semiconductor material in a sensing cell matrix (102);

determining (904) a plurality of mechanical stress values representing the mechanical stress on the semiconductor material at the sensing cell group for each sensing cell group comprising the sensing cell matrix;
determining (906) a mechanical stress distribution representing the mechanical stress on the semiconductor material based on the plurality of mechanical stress values.

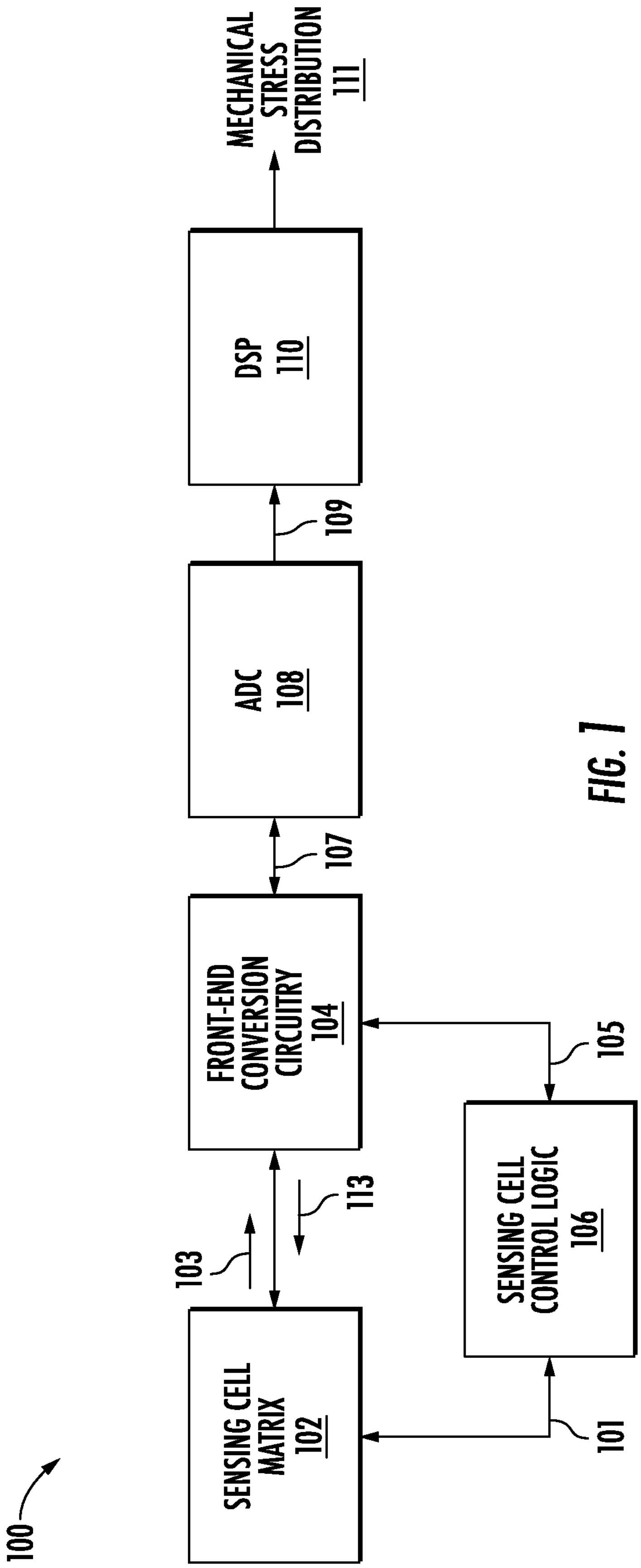
MECHANICAL STRESS DISTRIBUTION 111
DSP 110
109
ADC 108
107
FRONT-END CONVERSION CIRCUITRY 104
105
SENSING CELL CONTROL LOGIC 106
113
103
SENSING CELL MATRIX 102
101
100

FIG. 1

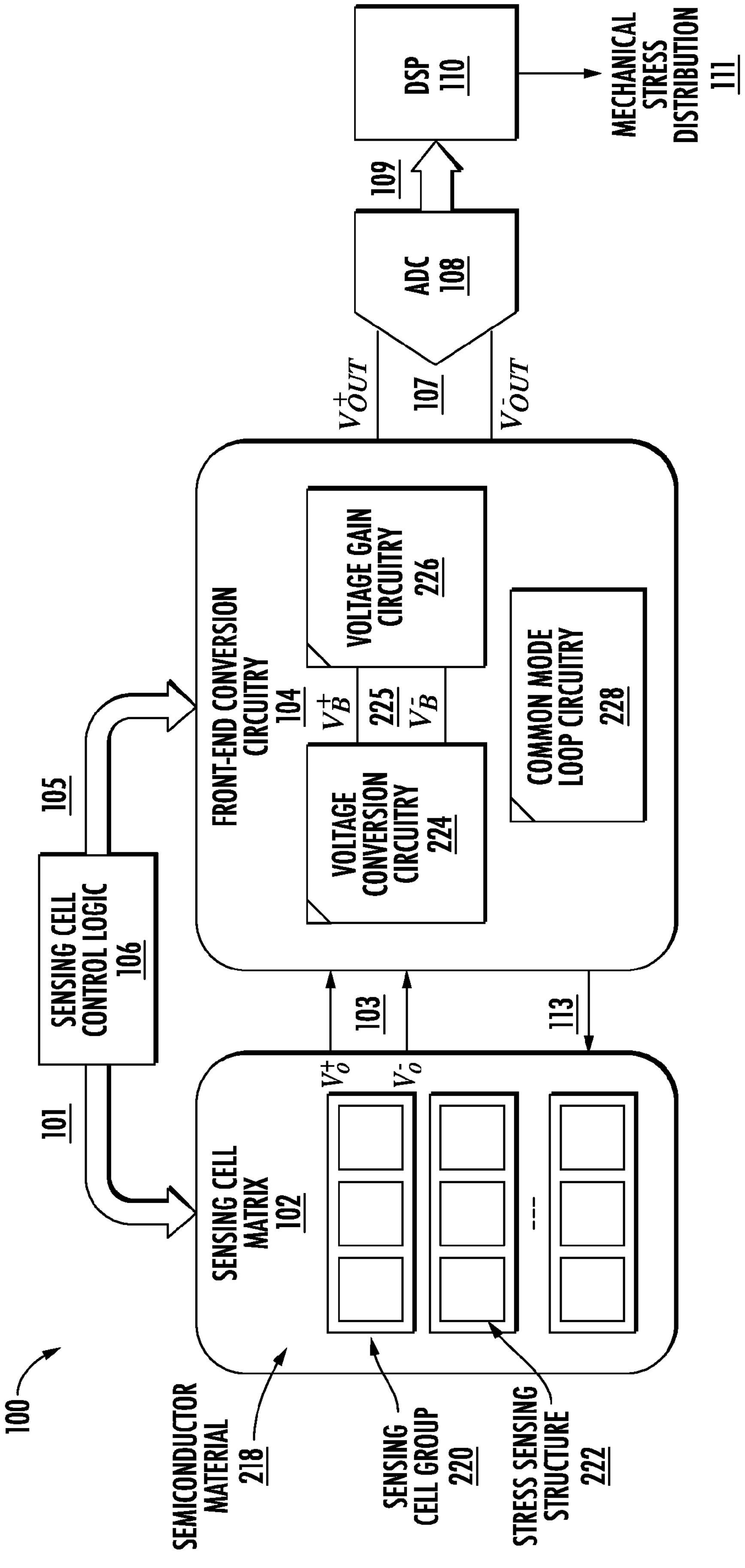
100
SEMICONDUCTOR MATERIAL 218
SENSING CELL GROUP 220
STRESS SENSING STRUCTURE 222
SENSING CELL MATRIX 102
101
SENSING CELL CONTROL LOGIC 106
105
$V_O^+$
$V_O^-$
103
113
FRONT-END CONVERSION CIRCUITRY 104
VOLTAGE CONVERSION CIRCUITRY 224
$V_B^+$
225
$V_B^-$
VOLTAGE GAIN CIRCUITRY 226
COMMON MODE LOOP CIRCUITRY 228
$V_{OUT}^+$
107
$V_{OUT}^-$
ADC 108
109
DSP 110
MECHANICAL STRESS DISTRIBUTION 111

FIG. 2

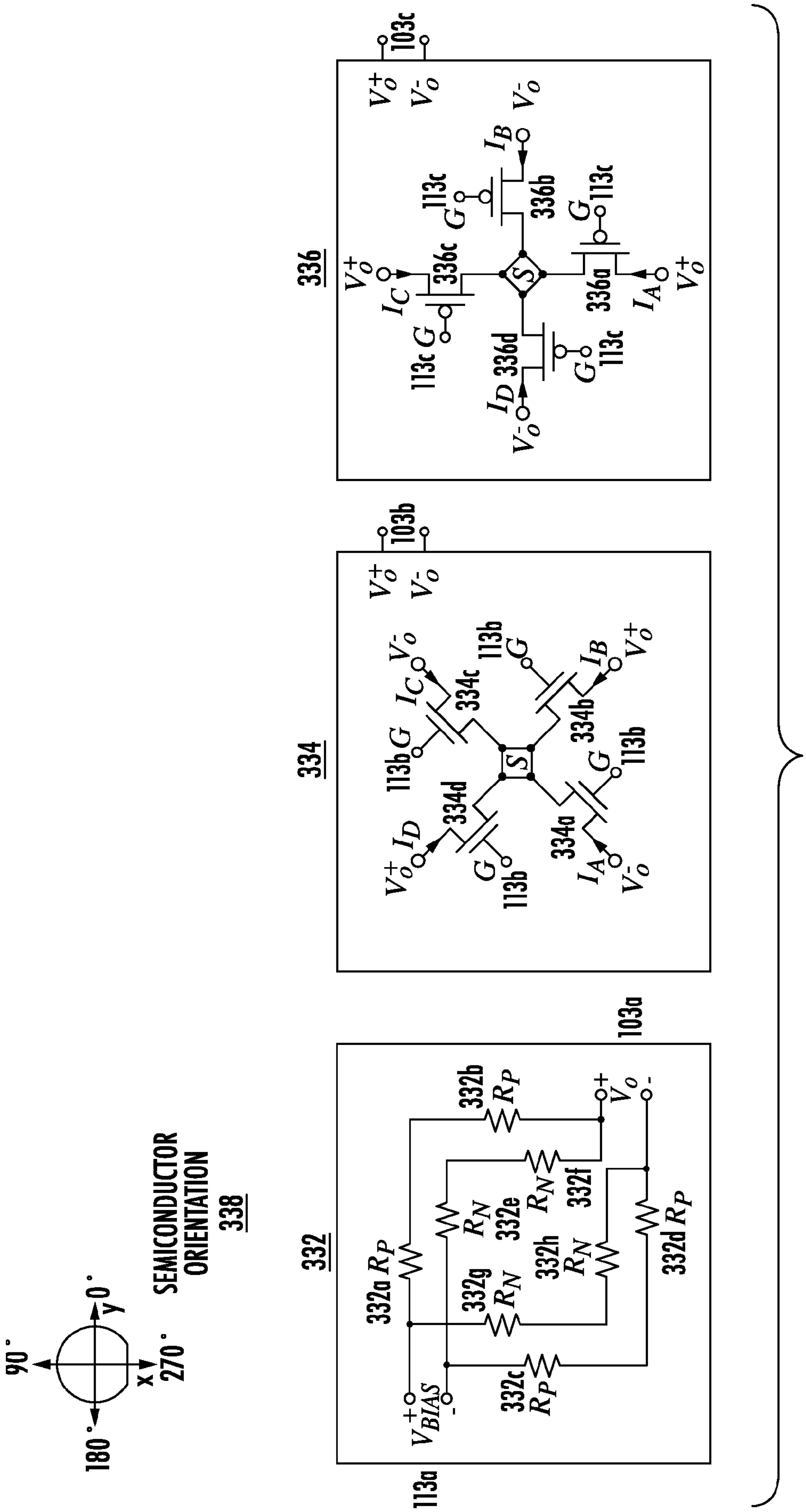
SEMICONDUCTOR ORIENTATION
338
0°
90°
180°
270°
x
y
332
103a
113a
$V_{BIAS}^{+}$
$V_{BIAS}^{-}$
332a $R_P$
332b $R_P$
332c $R_P$
332d $R_P$
332e $R_N$
332f $R_N$
332g $R_N$
332h $R_N$
$V_o^+$
$V_o^-$
334
103b
334a
334b
334c
334d
113b
G
S
$I_A$
$I_B$
$I_C$
$I_D$
336
103c
336a
336b
336c
336d
113c

FIG. 3

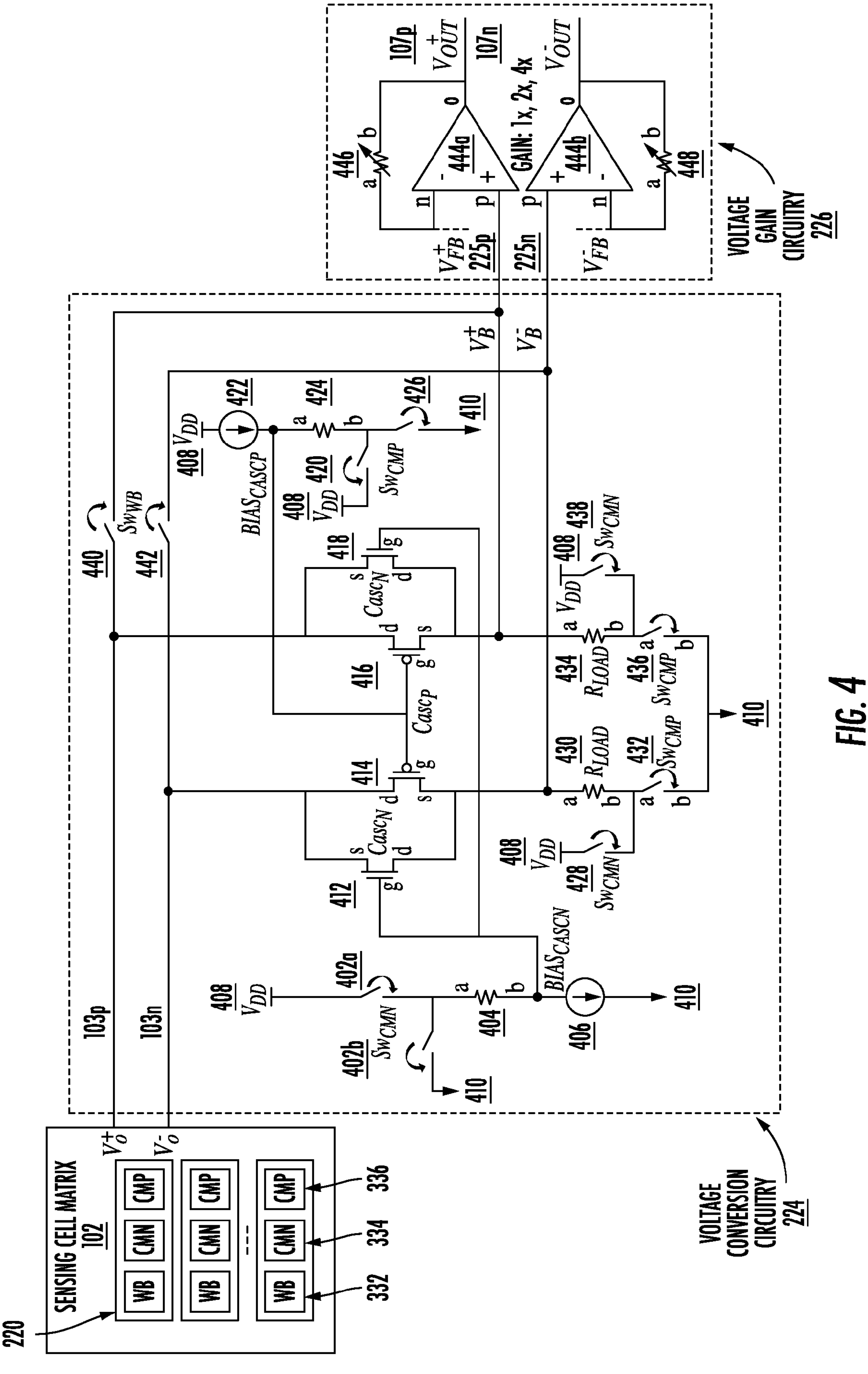
SENSING CELL MATRIX 102
WB
CMN
CMP
220
332
334
336
VOLTAGE CONVERSION CIRCUITRY 224
VOLTAGE GAIN CIRCUITRY 226
103p
103n
440
442
$Sw_{WB}$
408 $V_{DD}$
402a
402b
$Sw_{CMN}$
404
406
410
$BIAS_{CASCN}$
$BIAS_{CASCP}$
412
414
416
418
$Casc_N$
$Casc_P$
420
422
424
426
$Sw_{CMP}$
428
430
432
434
436
438
$R_{LOAD}$
$V_B^+$
$V_B^-$
$V_O^+$
$V_O^-$
225p
225n
$V_{FB}^+$
$V_{FB}^-$
444a
444b
446
448
GAIN: 1x, 2x, 4x
107p
107n
$V_{OUT}^+$
$V_{OUT}^-$

FIG. 4

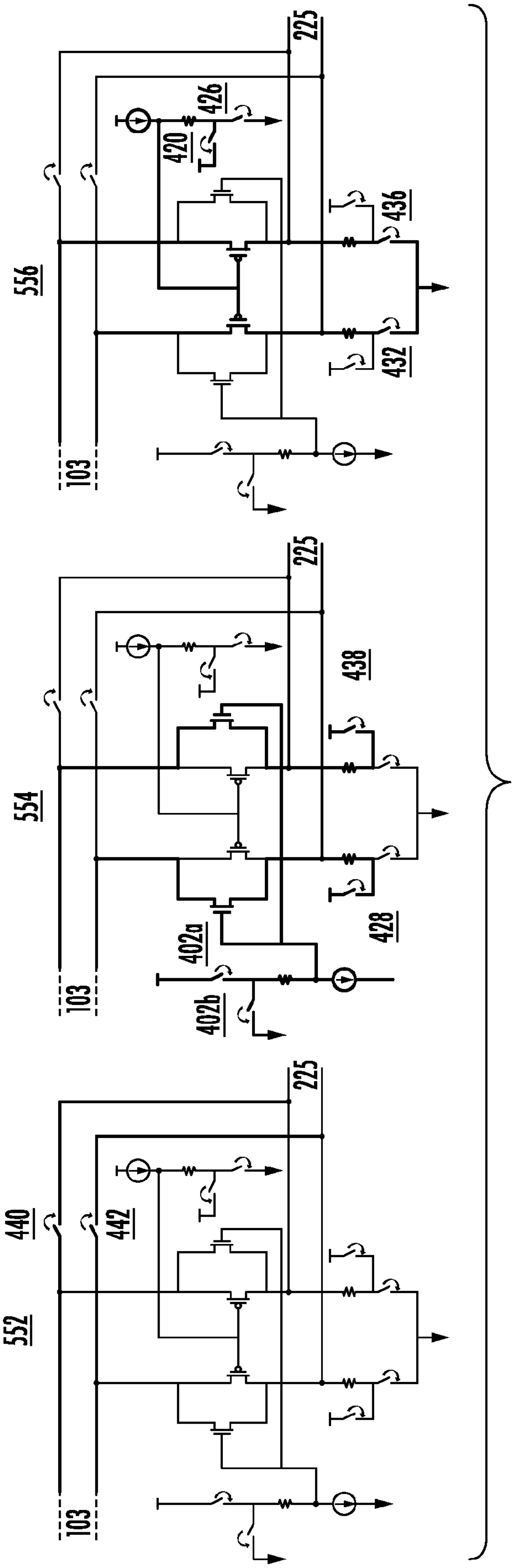

225
420
426
436
556
432
103
225
438
554
402a
428
402b
103
225
440
442
552
103


FIG. 5

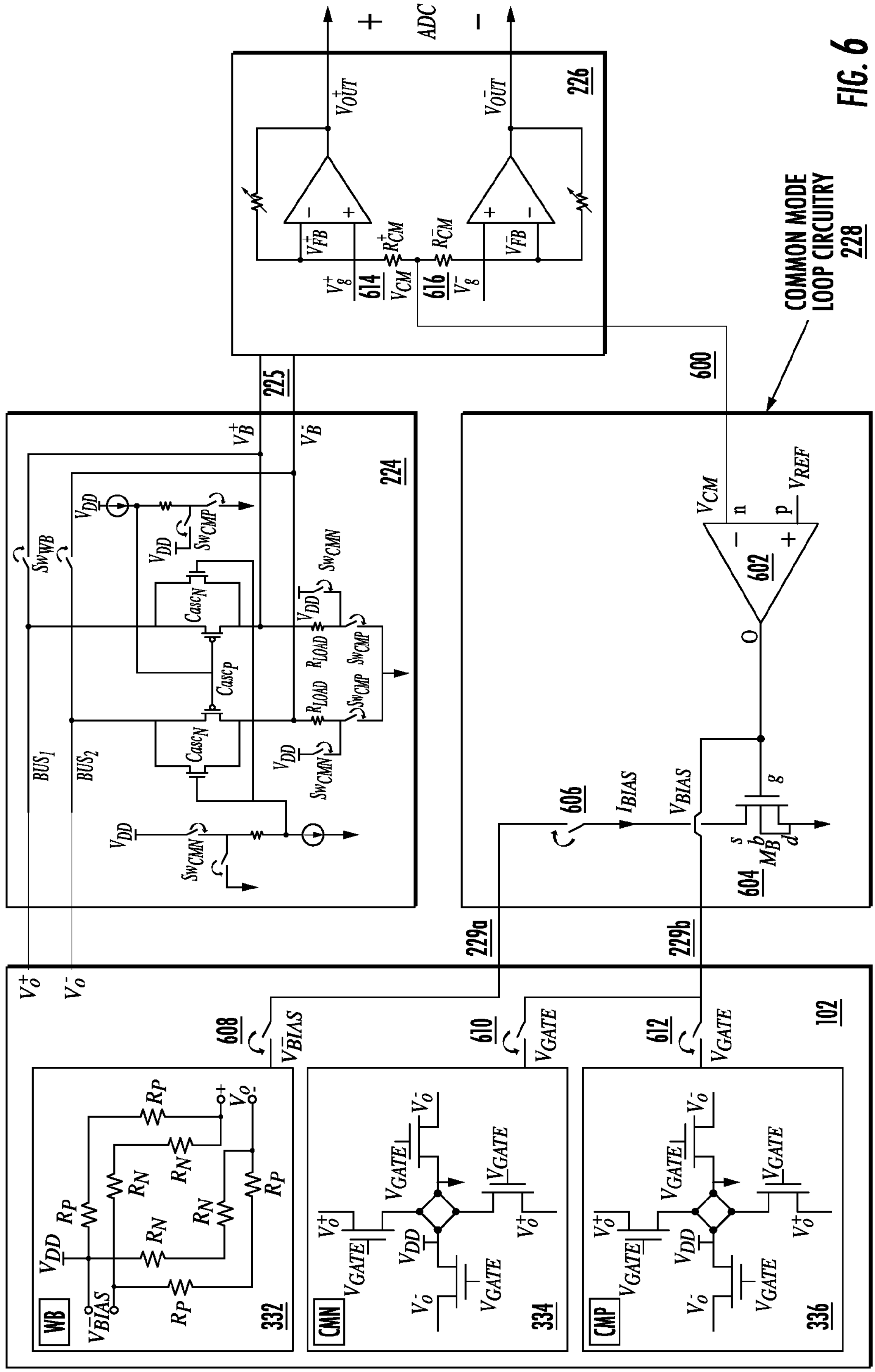
ADC
226
225
224
600
COMMON MODE LOOP CIRCUITRY 228
602
604
606
$I_{BIAS}$
$V_{BIAS}$
$V_{CM}$
$V_{REF}$
614
616
229a
229b
608
610
612
102
WB
332
CMN
334
CMP
336
$BUS_1$
$BUS_2$
$Sw_{WB}$
$Sw_{CMP}$
$Sw_{CMN}$
$R_{LOAD}$
$Casc_N$
$Casc_P$
$V_{DD}$
$V_{GATE}$
$R_P$
$R_N$

FIG. 6

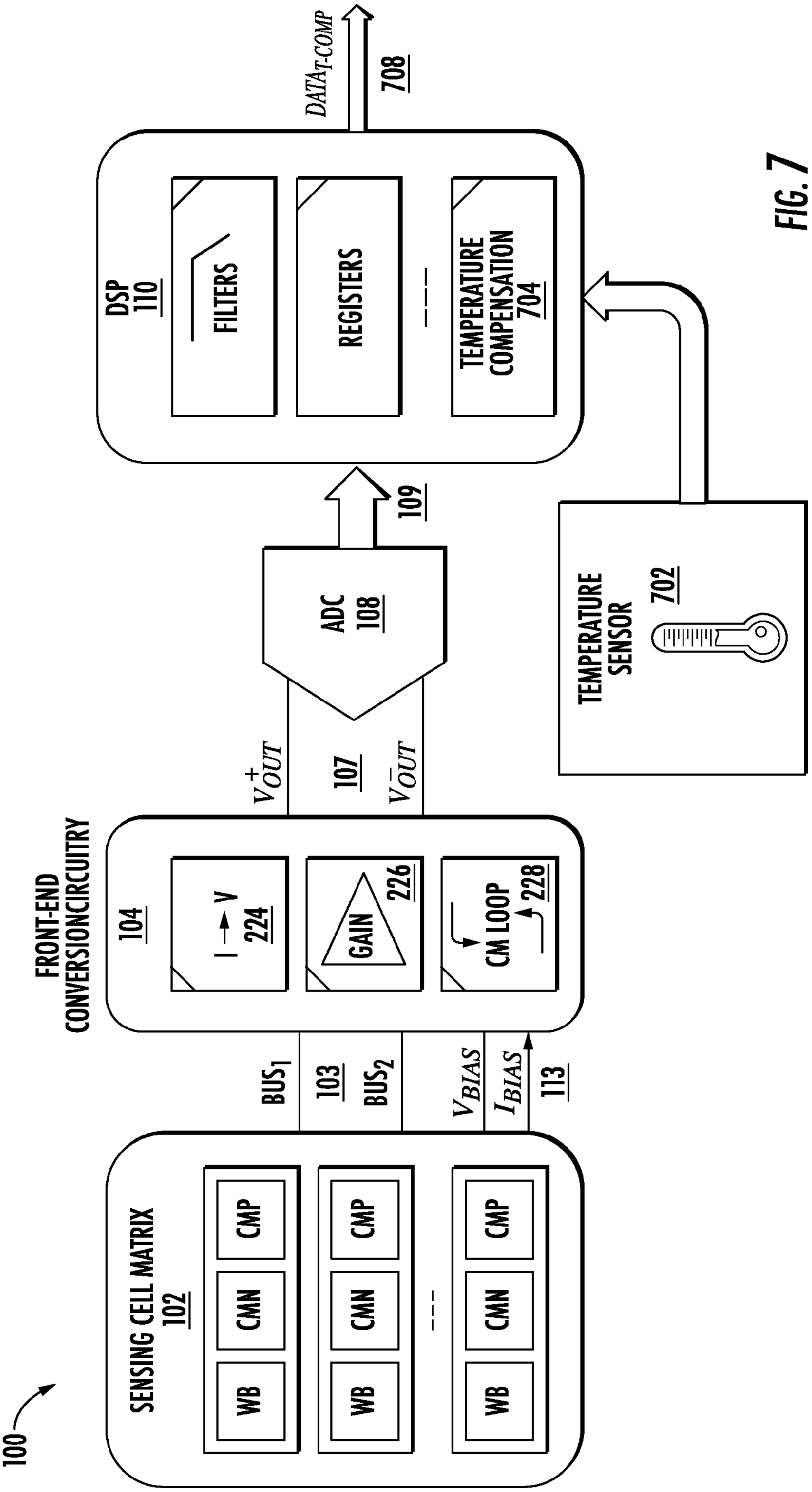
100
SENSING CELL MATRIX
102
WB
CMN
CMP
BUS1
103
BUS2
VBIAS
IBIAS
113
FRONT-END
CONVERSIONCIRCUITRY
104
I → V
224
GAIN
226
CM LOOP
228
V+OUT
107
V−OUT
ADC
108
109
DSP
110
FILTERS
REGISTERS
TEMPERATURE
COMPENSATION
704
DATAT-COMP
708
TEMPERATURE
SENSOR
702

FIG. 7

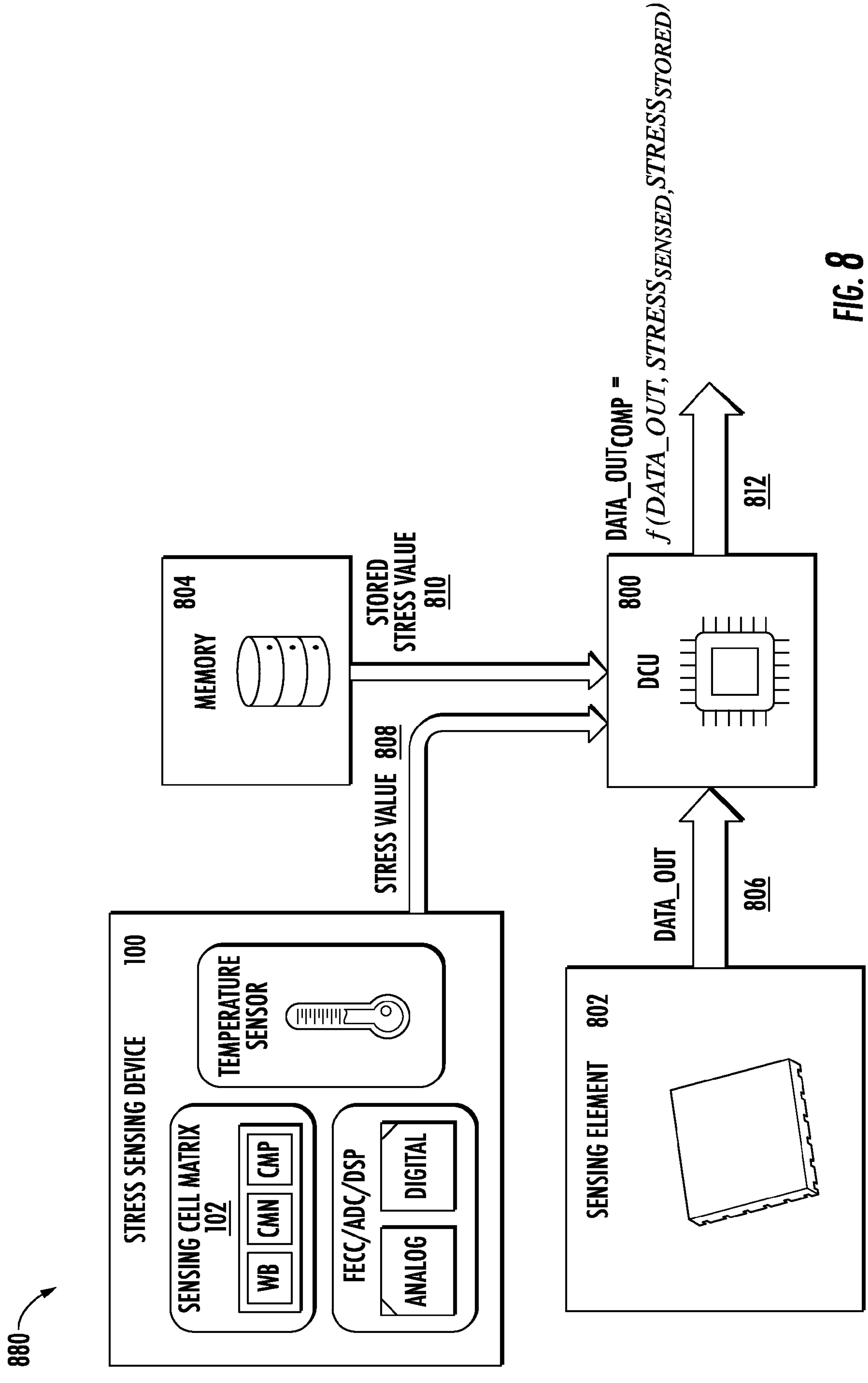
880
STRESS SENSING DEVICE
100
SENSING CELL MATRIX
102
WB
CMN
CMP
FECC/ADC/DSP
ANALOG
DIGITAL
TEMPERATURE SENSOR
STRESS VALUE 808
MEMORY
804
STORED STRESS VALUE
810
DCU
800
SENSING ELEMENT 802
DATA_OUT
806
$DATA_OUT_{COMP} = f(DATA_OUT, STRESS_{SENSED}, STRESS_{STORED})$
812

FIG. 8

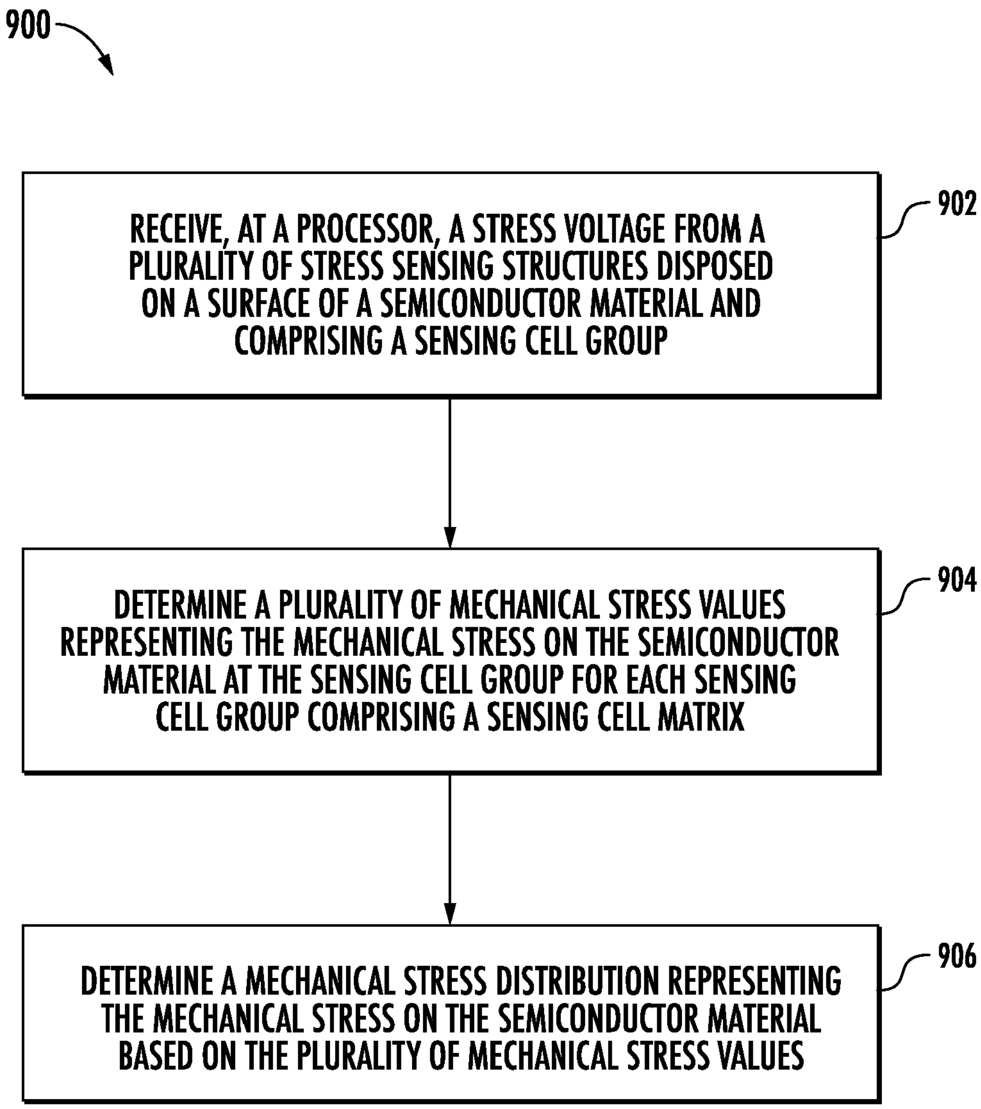
900
RECEIVE, AT A PROCESSOR, A STRESS VOLTAGE FROM A PLURALITY OF STRESS SENSING STRUCTURES DISPOSED ON A SURFACE OF A SEMICONDUCTOR MATERIAL AND COMPRISING A SENSING CELL GROUP
902
DETERMINE A PLURALITY OF MECHANICAL STRESS VALUES REPRESENTING THE MECHANICAL STRESS ON THE SEMICONDUCTOR MATERIAL AT THE SENSING CELL GROUP FOR EACH SENSING CELL GROUP COMPRISING A SENSING CELL MATRIX
904
DETERMINE A MECHANICAL STRESS DISTRIBUTION REPRESENTING THE MECHANICAL STRESS ON THE SEMICONDUCTOR MATERIAL BASED ON THE PLURALITY OF MECHANICAL STRESS VALUES
906

FIG. 9

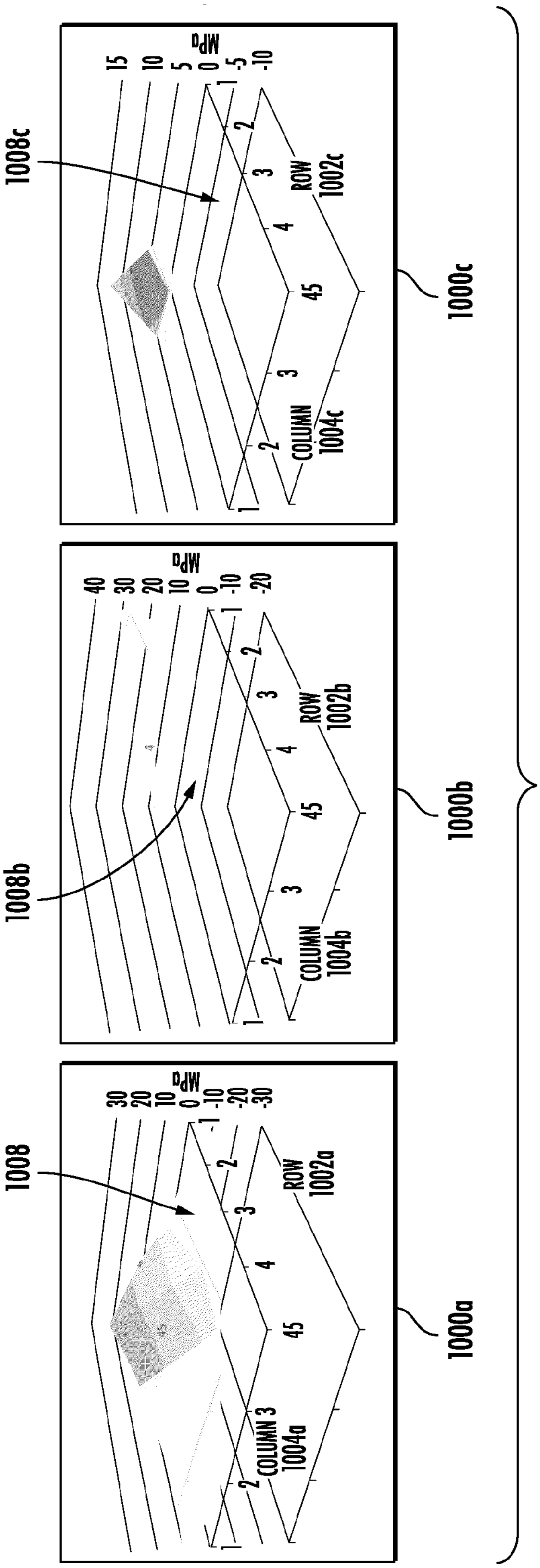
1008c
1008b
1008
1000a
1000b
1000c
MPa
ROW 1002a
ROW 1002b
ROW 1002c
COLUMN 1004a
COLUMN 1004b
COLUMN 1004c

FIG. 10

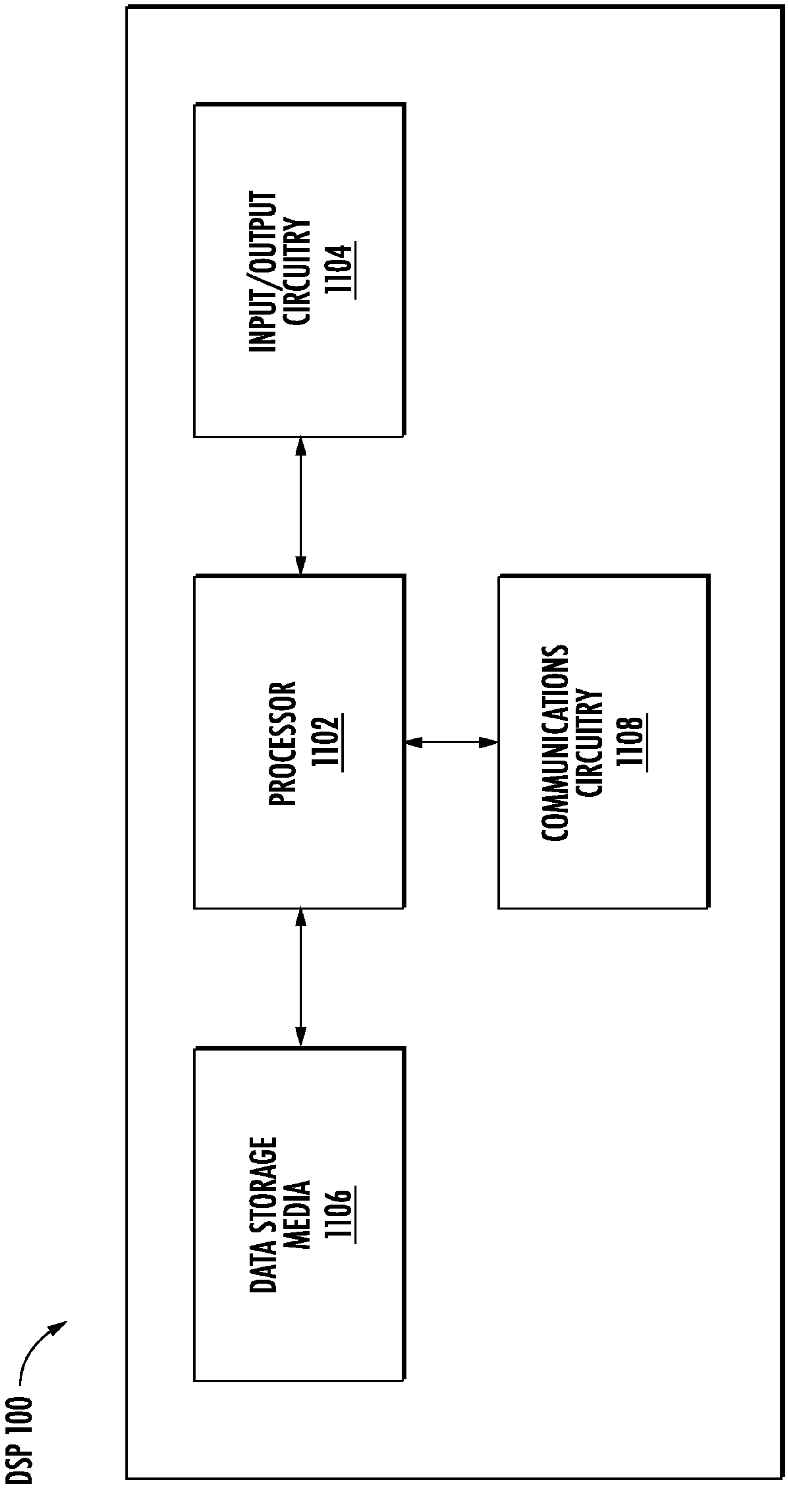
DSP 100
INPUT/OUTPUT CIRCUITRY 1104
PROCESSOR 1102
COMMUNICATIONS CIRCUITRY 1108
DATA STORAGE MEDIA 1106

FIG. 11

Europäisches Patentamt
European Patent Office
Office européen des brevets

# EUROPEAN SEARCH REPORT

Application Number
EP 25 17 6623

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/245668 A1 (AUSSERLECHNER UDO [AT] ET AL) 25 August 2016 (2016-08-25) | 1-3,8-15 | INV. G01L1/22 G01L5/00 G01L1/26 G01L5/16 |
| A | * paragraph [0070] - paragraph [0137]; figures * | 5-7 | |
| | ----- | | |
| X | US 2022/136913 A1 (DRASAL ZBYNEK [CZ] ET AL) 5 May 2022 (2022-05-05) | 1-4,8, 12,13,15 | |
| A | * paragraph [0022] - paragraph [0043]; figures * | 5-7 | |
| | ----- | | |
| X | RAMIREZ JOSE L ET AL: "Mechanical stress estimation using PiezoFET octagonal current mirrors", ANALOG INTEGRATED CIRCUITS AND SIGNAL PROCESSING, vol. 106, no. 1, 12 April 2020 (2020-04-12), pages 165-175, XP037352795, ISSN: 0925-1030, DOI: 10.1007/S10470-020-01647-4 | 1,8-11, 15 | |
| A | * the whole document * | 5-7 | TECHNICAL FIELDS SEARCHED (IPC) |
| | ----- | | G01L |

The present search report has been drawn up for all claims

| Place of search | Date of completion of the search | Examiner |
|---|---|---|
| The Hague | 17 October 2025 | Amroun, Sébastien |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 17 6623

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2025

| Patent document cited in search report | Publication date | Patent family member(s) | Publication date |
|---|---|---|---|
| US 2016245668 A1 | 25-08-2016 | CN 105910735 A | 31-08-2016 |
| | | DE 102015103075 A1 | 25-08-2016 |
| | | US 2016245668 A1 | 25-08-2016 |
| US 2022136913 A1 | 05-05-2022 | GB 2600803 A | 11-05-2022 |
| | | US 2022136913 A1 | 05-05-2022 |

EPO FORM P0459

For more details about this annex : see Official Journal of the European Patent Office, No. 12/82